# EUROPEAN PATENT APPLICATION

(11) **EP 4 283 945 A1**
(43) Date of publication of application: **29.11.2023**
(21) Application number: 23172612.6
(22) Date of filing: 10.05.2023
(51) Int. Cl.: H04L 45/00

(54) **SOURCE ROUTE COMPRESSION BASED ON ADDRESS COMPRESSION**

(30) Priority: 26.05.2022 US 202217825349
(71) Applicant: Nokia Solutions and Networks Oy, 02610 Espoo (FI)
(72) Inventor: Dutta, Pranjal, Sunnyvale, 94086 (US)
(74) Representative: Bryers LLP

(57) **Abstract**

Various example embodiments for supporting source route compression for source routing are presented herein. Various example embodiments for supporting source route compression for source routing may be configured to support source route compression for source routing based on use of address compression. Various example embodiments for supporting source route compression for source routing based on use of address compression may be configured to support encoding of a set of addresses of a set of hops of a source route by encoding a base address for a first hop of the set of hops and encoding address replacement information for the remaining hops of the set of hops where the address replacement information for the remaining hops of the set of hops can be used to modify the base address to form the addresses for the remaining hops of the set of hops.

## Description

### TECHNICAL FIELD

Various example embodiments relate generally to communications and, more particularly but not exclusively, to supporting communications based on source routing.

### BACKGROUND

In communication networks, various communications technologies may be used to support various types of communications.

### SUMMARY

In at least some example embodiments, an apparatus includes at least one processor and at least one memory including computer program code, wherein the at least one memory and the computer program code are configured to, with the at least one processor, cause the apparatus at least to support communication of a source routed packet including an encoding of a set of hops to be traversed by the source routed packet, wherein the encoding of the set of hops includes an encoding of a first address of a first hop in the set of hops and an encoding of address replacement information associated with a second hop in the set of hops, wherein the address replacement information is configured to support replacement of a portion of the first address with an address replacement portion to form a second address of the second hop in the set of hops. In at least some example embodiments, the address replacement information includes a starting replacement position of the first address, an ending replacement position of the first address, and the address replacement portion. In at least some example embodiments, the address replacement information includes a starting bit position of the first address for the portion of the first address to be replaced with the address replacement portion, an ending bit position of the first address for the portion of the first address to be replaced with the address replacement portion, and a bit string for use as the address replacement portion. In at least some example embodiments, the encoding of the set of hops is based on a compressed source route block that includes a base address field encoding the first address of the first hop, a length field encoding a length of a portion of the compressed source route block, a substitute bit string list encoding the address replacement information associated with the second hop in the set of hops, and a pointer field encoding a location, within the substitute bit string list, of the address replacement information associated with the second hop in the set of hop. In at least some example embodiments, the source routed packet is an Internet Protocol version 4 (IPv4) packet. In at least some example embodiments, the encoding of the set of hops is included within an IPv4 Header Option or an IPv4 Shim Header. In at least some example embodiments, the encoding of the set of hops is included within an IPv4 Header Option, wherein the IPv4 Header Option includes a type field configured to indicate that the IPv4 Header Option is a compressed source route option, a length field, and a set of compressed source route blocks including at least a first compressed source route block including the encoding of the first address of the first hop in the set of hops and the encoding of address replacement information associated with the second hop in the set of hops. In at least some example embodiments, the source routed packet is an Internet Protocol version 6 (IPv6) packet. In at least some example embodiments, the encoding of the set of hops is included within an IPv6 Extension Header or an IPv6 Shim Header. In at least some example embodiments, the encoding of the set of hops is included within an IPv6 Extension Header, wherein the IPv6 Extension Header is a Hop-by-Hop Options Header. In at least some example embodiments, the Hop-by-Hop Options Header includes a Next Header field, a Header Extension Length field, and an Options field, wherein the Options field includes an Option Type field configured to indicate that the Hop-by-Hop Options Header includes a compressed source route option, an Option Data Length field, and an Option Data field including a set of compressed source route blocks that includes at least a first compressed source route block including the encoding of the first address of the first hop in the set of hops and the encoding of address replacement information associated with the second hop in the set of hops. In at least some example embodiments, the source routed packet is an Internet Protocol (IP) packet. In at least some example embodiments, the encoding of the set of hops is included within an IP Shim Header. In at least some example embodiments, the IP Shim Header includes a type field configured to indicate that the IP Shim Header includes a compressed source route, a length field, a next header field, and a payload including a set of compressed source route blocks including at least a first compressed source route block including the encoding of the first address of the first hop in the set of hops and the encoding of address replacement information associated with the second hop in the set of hops. In at least some example embodiments, the source routed packet is a Multiprotocol Label Switching (MPLS) packet. In at least some example embodiments, the MPLS packet includes a set of labels, wherein the set of labels includes a first label configured to indicate that the set of labels includes a compressed source route, a second label including the encoding of the first address of the first hop in the set of hops, and a third label including the encoding of address replacement information associated with the second hop in the set of hops. In at least some example embodiments, the source routed packet is an Ethernet packet. In at least some example embodiments, to support communication of the source routed packet, the at least one memory and the computer program code are configured to, with the at least one processor, cause the apparatus at least to identify, by a node, a source route for the source routed packet, wherein the source route includes the set of hops, associate, by the node, the encoding of the set of hops with a packet to form the source routed packet, and forward, by the node, the source routed packet. In at least some example embodiments, to support communication of the source routed packet, the at least one memory and the computer program code are configured to, with the at least one processor, cause the apparatus at least to receive, by a node which is the first hop, the source routed packet, determine, by the node which is the first hop, based on the first address and the address replacement information associated with the second hop, the second address of the second hop, and forward, by the node which is the first hop toward the second hop based on the second address of the second hop, the source routed packet.

In at least some example embodiments, a computer readable medium stores computer program code configured to cause an apparatus to support communication of a source routed packet including an encoding of a set of hops to be traversed by the source routed packet, wherein the encoding of the set of hops includes an encoding of a first address of a first hop in the set of hops and an encoding of address replacement information associated with a second hop in the set of hops, wherein the address replacement information is configured to support replacement of a portion of the first address with an address replacement portion to form a second address of the second hop in the set of hops. In at least some example embodiments, the address replacement information includes a starting replacement position of the first address, an ending replacement position of the first address, and the address replacement portion. In at least some example embodiments, the address replacement information includes a starting bit position of the first address for the portion of the first address to be replaced with the address replacement portion, an ending bit position of the first address for the portion of the first address to be replaced with the address replacement portion, and a bit string for use as the address replacement portion. In at least some example embodiments, the encoding of the set of hops is based on a compressed source route block that includes a base address field encoding the first address of the first hop, a length field encoding a length of a portion of the compressed source route block, a substitute bit string list encoding the address replacement information associated with the second hop in the set of hops, and a pointer field encoding a location, within the substitute bit string list, of the address replacement information associated with the second hop in the set of hop. In at least some example embodiments, the source routed packet is an Internet Protocol version 4 (IPv4) packet. In at least some example embodiments, the encoding of the set of hops is included within an IPv4 Header Option or an IPv4 Shim Header. In at least some example embodiments, the encoding of the set of hops is included within an IPv4 Header Option, wherein the IPv4 Header Option includes a type field configured to indicate that the IPv4 Header Option is a compressed source route option, a length field, and a set of compressed source route blocks including at least a first compressed source route block including the encoding of the first address of the first hop in the set of hops and the encoding of address replacement information associated with the second hop in the set of hops. In at least some example embodiments, the source routed packet is an Internet Protocol version 6 (IPv6) packet. In at least some example embodiments, the encoding of the set of hops is included within an IPv6 Extension Header or an IPv6 Shim Header. In at least some example embodiments, the encoding of the set of hops is included within an IPv6 Extension Header, wherein the IPv6 Extension Header is a Hop-by-Hop Options Header. In at least some example embodiments, the Hop-by-Hop Options Header includes a Next Header field, a Header Extension Length field, and an Options field, wherein the Options field includes an Option Type field configured to indicate that the Hop-by-Hop Options Header includes a compressed source route option, an Option Data Length field, and an Option Data field including a set of compressed source route blocks that includes at least a first compressed source route block including the encoding of the first address of the first hop in the set of hops and the encoding of address replacement information associated with the second hop in the set of hops. In at least some example embodiments, the source routed packet is an Internet Protocol (IP) packet. In at least some example embodiments, the encoding of the set of hops is included within an IP Shim Header. In at least some example embodiments, the IP Shim Header includes a type field configured to indicate that the IP Shim Header includes a compressed source route, a length field, a next header field, and a payload including a set of compressed source route blocks including at least a first compressed source route block including the encoding of the first address of the first hop in the set of hops and the encoding of address replacement information associated with the second hop in the set of hops. In at least some example embodiments, the source routed packet is a Multiprotocol Label Switching (MPLS) packet. In at least some example embodiments, the MPLS packet includes a set of labels, wherein the set of labels includes a first label configured to indicate that the set of labels includes a compressed source route, a second label including the encoding of the first address of the first hop in the set of hops, and a third label including the encoding of address replacement information associated with the second hop in the set of hops. In at least some example embodiments, the source routed packet is an Ethernet packet. In at least some example embodiments, to support communication of the source routed packet, the computer program code is configured to cause the apparatus at least to identify, by a node, a source route for the source routed packet, wherein the source route includes the set of hops, associate, by the node, the encoding of the set of hops with a packet to form the source routed packet, and forward, by the node, the source routed packet. In at least some example embodiments, to support communication of the source routed packet, the computer program code is configured to cause the apparatus at least to receive, by a node which is the first hop, the source routed packet, determine, by the node which is the first hop, based on the first address and the address replacement information associated with the second hop, the second address of the second hop, and forward, by the node which is the first hop toward the second hop based on the second address of the second hop, the source routed packet.

In at least some example embodiments, a method includes supporting communication of a source routed packet including an encoding of a set of hops to be traversed by the source routed packet, wherein the encoding of the set of hops includes an encoding of a first address of a first hop in the set of hops and an encoding of address replacement information associated with a second hop in the set of hops, wherein the address replacement information is configured to support replacement of a portion of the first address with an address replacement portion to form a second address of the second hop in the set of hops. In at least some example embodiments, the address replacement information includes a starting replacement position of the first address, an ending replacement position of the first address, and the address replacement portion. In at least some example embodiments, the address replacement information includes a starting bit position of the first address for the portion of the first address to be replaced with the address replacement portion, an ending bit position of the first address for the portion of the first address to be replaced with the address replacement portion, and a bit string for use as the address replacement portion. In at least some example embodiments, the encoding of the set of hops is based on a compressed source route block that includes a base address field encoding the first address of the first hop, a length field encoding a length of a portion of the compressed source route block, a substitute bit string list encoding the address replacement information associated with the second hop in the set of hops, and a pointer field encoding a location, within the substitute bit string list, of the address replacement information associated with the second hop in the set of hop. In at least some example embodiments, the source routed packet is an Internet Protocol version 4 (IPv4) packet. In at least some example embodiments, the encoding of the set of hops is included within an IPv4 Header Option or an IPv4 Shim Header. In at least some example embodiments, the encoding of the set of hops is included within an IPv4 Header Option, wherein the IPv4 Header Option includes a type field configured to indicate that the IPv4 Header Option is a compressed source route option, a length field, and a set of compressed source route blocks including at least a first compressed source route block including the encoding of the first address of the first hop in the set of hops and the encoding of address replacement information associated with the second hop in the set of hops. In at least some example embodiments, the source routed packet is an Internet Protocol version 6 (IPv6) packet. In at least some example embodiments, the encoding of the set of hops is included within an IPv6 Extension Header or an IPv6 Shim Header. In at least some example embodiments, the encoding of the set of hops is included within an IPv6 Extension Header, wherein the IPv6 Extension Header is a Hop-by-Hop Options Header. In at least some example embodiments, the Hop-by-Hop Options Header includes a Next Header field, a Header Extension Length field, and an Options field, wherein the Options field includes an Option Type field configured to indicate that the Hop-by-Hop Options Header includes a compressed source route option, an Option Data Length field, and an Option Data field including a set of compressed source route blocks that includes at least a first compressed source route block including the encoding of the first address of the first hop in the set of hops and the encoding of address replacement information associated with the second hop in the set of hops. In at least some example embodiments, the source routed packet is an Internet Protocol (IP) packet. In at least some example embodiments, the encoding of the set of hops is included within an IP Shim Header. In at least some example embodiments, the IP Shim Header includes a type field configured to indicate that the IP Shim Header includes a compressed source route, a length field, a next header field, and a payload including a set of compressed source route blocks including at least a first compressed source route block including the encoding of the first address of the first hop in the set of hops and the encoding of address replacement information associated with the second hop in the set of hops. In at least some example embodiments, the source routed packet is a Multiprotocol Label Switching (MPLS) packet. In at least some example embodiments, the MPLS packet includes a set of labels, wherein the set of labels includes a first label configured to indicate that the set of labels includes a compressed source route, a second label including the encoding of the first address of the first hop in the set of hops, and a third label including the encoding of address replacement information associated with the second hop in the set of hops. In at least some example embodiments, the source routed packet is an Ethernet packet. In at least some example embodiments, supporting communication of the source routed packet includes identifying, by a node, a source route for the source routed packet, wherein the source route includes the set of hops, associating, by the node, the encoding of the set of hops with a packet to form the source routed packet, and forwarding, by the node, the source routed packet. In at least some example embodiments, supporting communication of the source routed packet includes receiving, by a node which is the first hop, the source routed packet, determining, by the node which is the first hop, based on the first address and the address replacement information associated with the second hop, the second address of the second hop, and forwarding, by the node which is the first hop toward the second hop based on the second address of the second hop, the source routed packet.

In at least some example embodiments, an apparatus includes means for supporting communication of a source routed packet including an encoding of a set of hops to be traversed by the source routed packet, wherein the encoding of the set of hops includes an encoding of a first address of a first hop in the set of hops and an encoding of address replacement information associated with a second hop in the set of hops, wherein the address replacement information is configured to support replacement of a portion of the first address with an address replacement portion to form a second address of the second hop in the set of hops. In at least some example embodiments, the address replacement information includes a starting replacement position of the first address, an ending replacement position of the first address, and the address replacement portion. In at least some example embodiments, the address replacement information includes a starting bit position of the first address for the portion of the first address to be replaced with the address replacement portion, an ending bit position of the first address for the portion of the first address to be replaced with the address replacement portion, and a bit string for use as the address replacement portion. In at least some example embodiments, the encoding of the set of hops is based on a compressed source route block that includes a base address field encoding the first address of the first hop, a length field encoding a length of a portion of the compressed source route block, a substitute bit string list encoding the address replacement information associated with the second hop in the set of hops, and a pointer field encoding a location, within the substitute bit string list, of the address replacement information associated with the second hop in the set of hop. In at least some example embodiments, the source routed packet is an Internet Protocol version 4 (IPv4) packet. In at least some example embodiments, the encoding of the set of hops is included within an IPv4 Header Option or an IPv4 Shim Header. In at least some example embodiments, the encoding of the set of hops is included within an IPv4 Header Option, wherein the IPv4 Header Option includes a type field configured to indicate that the IPv4 Header Option is a compressed source route option, a length field, and a set of compressed source route blocks including at least a first compressed source route block including the encoding of the first address of the first hop in the set of hops and the encoding of address replacement information associated with the second hop in the set of hops. In at least some example embodiments, the source routed packet is an Internet Protocol version 6 (IPv6) packet. In at least some example embodiments, the encoding of the set of hops is included within an IPv6 Extension Header or an IPv6 Shim Header. In at least some example embodiments, the encoding of the set of hops is included within an IPv6 Extension Header, wherein the IPv6 Extension Header is a Hop-by-Hop Options Header. In at least some example embodiments, the Hop-by-Hop Options Header includes a Next Header field, a Header Extension Length field, and an Options field, wherein the Options field includes an Option Type field configured to indicate that the Hop-by-Hop Options Header includes a compressed source route option, an Option Data Length field, and an Option Data field including a set of compressed source route blocks that includes at least a first compressed source route block including the encoding of the first address of the first hop in the set of hops and the encoding of address replacement information associated with the second hop in the set of hops. In at least some example embodiments, the source routed packet is an Internet Protocol (IP) packet. In at least some example embodiments, the encoding of the set of hops is included within an IP Shim Header. In at least some example embodiments, the IP Shim Header includes a type field configured to indicate that the IP Shim Header includes a compressed source route, a length field, a next header field, and a payload including a set of compressed source route blocks including at least a first compressed source route block including the encoding of the first address of the first hop in the set of hops and the encoding of address replacement information associated with the second hop in the set of hops. In at least some example embodiments, the source routed packet is a Multiprotocol Label Switching (MPLS) packet. In at least some example embodiments, the MPLS packet includes a set of labels, wherein the set of labels includes a first label configured to indicate that the set of labels includes a compressed source route, a second label including the encoding of the first address of the first hop in the set of hops, and a third label including the encoding of address replacement information associated with the second hop in the set of hops. In at least some example embodiments, the source routed packet is an Ethernet packet. In at least some example embodiments, the means for supporting communication of the source routed packet includes means for identifying, by a node, a source route for the source routed packet, wherein the source route includes the set of hops, means for associating, by the node, the encoding of the set of hops with a packet to form the source routed packet, and means for forwarding, by the node, the source routed packet. In at least some example embodiments, the means for supporting communication of the source routed packet includes means for receiving, by a node which is the first hop, the source routed packet, means for determining, by the node which is the first hop, based on the first address and the address replacement information associated with the second hop, the second address of the second hop, and means for forwarding, by the node which is the first hop toward the second hop based on the second address of the second hop, the source routed packet.

### BRIEF DESCRIPTION OF THE DRAWINGS

The teachings herein can be readily understood by considering the following detailed description in conjunction with the accompanying drawings, in which:
FIG. 1 depicts an example embodiment of a communication system configured to support source routing using source route compression based on use of address compression;
FIG. 2 depicts an example embodiment of a communication system configured to support source routing using source route compression based on use of address compression;
FIG. 3 depicts an example embodiment of a method for use by an ingress node of a source route to construct a compressed source route for use in packets communicated via the source route;
FIG. 4 depicts an example embodiment of a method for use by a transit node or an egress node of a source route to process a compressed source route included packets communicated via the source route;
FIG. 5 depicts an example embodiment of a method for use by a transit node or an egress node of a source route to generate a hop identifier within the context of processing a compressed source route included in a packet communicated via the source route;
FIG. 6 depicts an example embodiment of an IPv4 Header including an IPv4 Option configured to support communication of a compressed source route based on substitute bit strings;
FIG. 7 depicts an example embodiment of a Compressed Source Route Option configured to support source route compression based on substitute bit strings for IPv4;
FIG. 8 depicts an example embodiment of a Compressed Source Route Block for use in the Compressed Source Route Option of FIG. 7;
FIG. 9 depicts an example embodiment of a Substitute Bit String entry for use in the Compressed Source Route Block of FIG. 8;
FIG. 10 depicts an example embodiment of a protocol stack including an IPv4 Shim Layer configured to support communication of a compressed source route based on substitute bit strings;
FIG. 11 depicts an example embodiment of an IPv4 Shim Header configured for use at the IPv4 Shim Layer of FIG. 10;
FIG. 12 depicts an example embodiment of a Payload configured for use in the IPv4 Shim Header of FIG. 11;
FIG. 13 depicts an example embodiment of an IPv6 packet including an IPv6 Header that includes a set of IPv6 Extension Headers configured to support communication of a CSR based on substitute bit strings;
FIG. 14 depicts an example embodiment of a Hop-by-Hop Options Header for use as in IPv6 Extension Header in the IPv6 packet of FIG. 13;
FIG. 15 depicts an example embodiment of a TLV-encoded option for use in the Hop-by-Hop Options Header of FIG. 14;
FIG. 16 depicts an example embodiment of a Compressed Source Route Option configured to support source route compression based on substitute bit strings for IPv6;
FIG. 17 depicts an example embodiment of a Compressed Source Route Block for use in the Compressed Source Route Option of FIG. 16;
FIG. 18 depicts an example embodiment of a Substitute Bit String entry for use in the Compressed Source Route Block of FIG. 17;
FIG. 19 depicts an example embodiment of a protocol stack including an IPv6 Shim Layer configured to support communication of a compressed source route based on substitute bit strings;
FIG. 20 depicts an example embodiment of an IPv6 Shim Header configured for use at the IPv6 Shim Layer of FIG. 19;
FIG. 21 depicts an example embodiment of a Payload configured for use in the IPv6 Shim Header of FIG. 20;
FIG. 22 depicts an example embodiment of a Compressed Source Route Block configured to support source route compression based on substitute bit strings for Multiprotocol Label Switching;
FIG. 23 depicts an example embodiment of a Substitute Bit String entry for use in the Compressed Source Route Block of FIG. 22;
FIG. 24 depicts an example embodiment of a Multiprotocol Label Switching packet with a CSR including two CSRB label stacks associated with two areas spanned by the CSR;
FIG. 25 depicts an example embodiment of a method for supporting communication based on use address compression for source route compression in source routing; and
FIG. 26 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting source route compression for source routing are presented herein. Various example embodiments for supporting source route compression for source routing may be configured to support source route compression for source routing based on use of address compression. Various example embodiments for supporting source route compression for source routing based on use of address compression may be configured to support encoding of a set of addresses of a set of hops of a source route by encoding a base address for a first hop of the set of hops and encoding address replacement information for the remaining hops of the set of hops where the address replacement information for the remaining hops of the set of hops can be used to modify the base address to form the addresses for the remaining hops of the set of hops. Various example embodiments for supporting source route compression for source routing based on use of address compression may be configured to support source route compression for source routing based on use of substitute bit strings for address compression (e.g., substitute bit strings are encoded for the remaining hops of the set of hops and a portion of the bit string of the base address is replaced with the substitute bit strings of the remaining hops to form the addresses for the remaining hops of the set of hops). It will be appreciated that these and various other example embodiments and advantages or potential advantages of supporting source routing may be further understood by way of reference to the various figures, which are discussed further below.

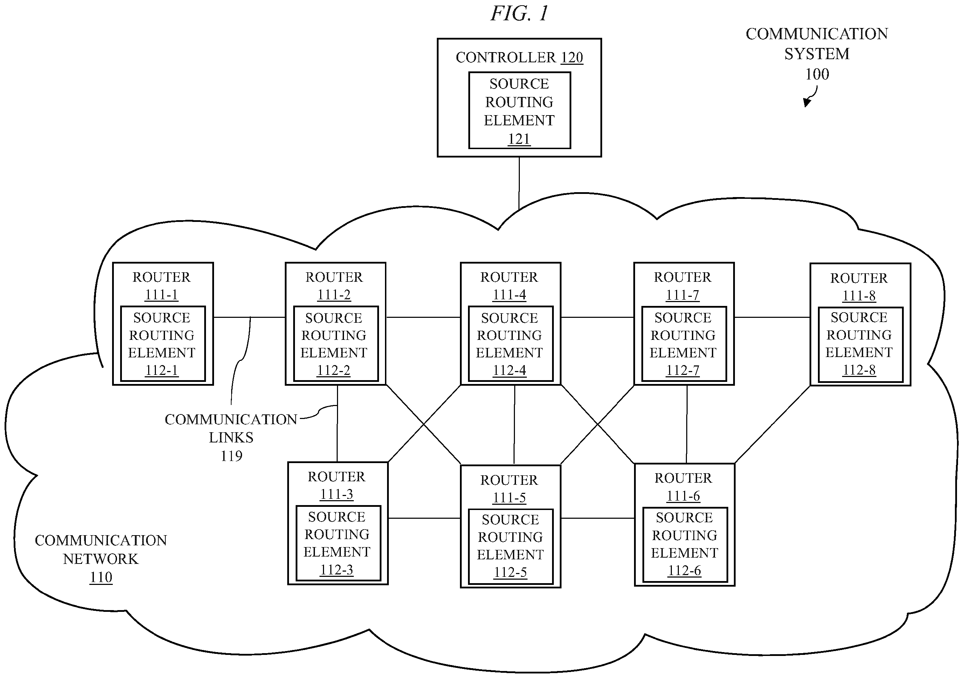

FIG. 1 depicts an example embodiment of a communication system configured to support source routing using source route compression based on use of address compression.

The communication system 100 includes a communication network 110 and a controller 120. The communication network 110 is a packet-switched network including a set of routers 111-1 - 111-8 (collectively, routers 111, which are also referred to herein using the notation Rx) and a set of communication links 119 via which the routers 111 are communicatively connected. The communication network 110 is configured to support various data plane and control plane functions for supporting communication of traffic including communication of source routed packets. The communication network 110 is configured to support source routing of packets using source route compression. The communication network 110 is configured to support source routing of packets using source route compression based on use of address compression for encoding source routes within source routed packets. The communication network 110 is configured to support source routing of packets using source route compression based on use of substitute bit strings for encoding source routes within source routed packets. The routers 111 are configured to support source routing of packets using source route compression based on use of address compression for encoding source routes within source routed packets. The routers 111-1 - 111-8 include source routing elements 112-1 - 112-8 (collectively, source routing elements 112), respectively, which are configured to support source routing of packets using source route compression based on use of address compression for encoding source routes within source routed packets. The controller 120 is configured to provide various control functions for the communication network 110 (e.g., maintaining network topology and traffic engineering information, computing source routes for ingress routers in the communication network 110, or the like, as well as various combinations thereof) including control functions configured to support source routing of packets by routers 111 of communication network 110 using source route compression based on use of address compression for encoding source routes within source routed packets. The controller 120 includes a source routing element 121 configured to support source routing of packets, using source route compression based on use of address compression for encoding source routes within source routed packets, by routers 111 of communication network 110. Various example embodiments for supporting source route compression within the communication network 110 may be further understood by first considering various aspects of packet switched networks configured to support source routing.

Packet-switched networks are built on mesh topologies in which multiple paths to a destination exist. The links in the mesh are point-to-point links j oined by nodes. A path to a destination may go through any number of nodes, and the path may change at any time due to traffic problems or failed links. In this environment, the following two possible packet routing methods are possible: hop-by-hop destination-based routing and source routing.

Hop-by-hop, destination-based routing is like getting directions along the way. A packet has a destination address. Each node looks at the address and makes a routing decision about how to forward the packet. Thus, decisions are made on a hop-by-hop basis in the network until the packet reaches its destination.

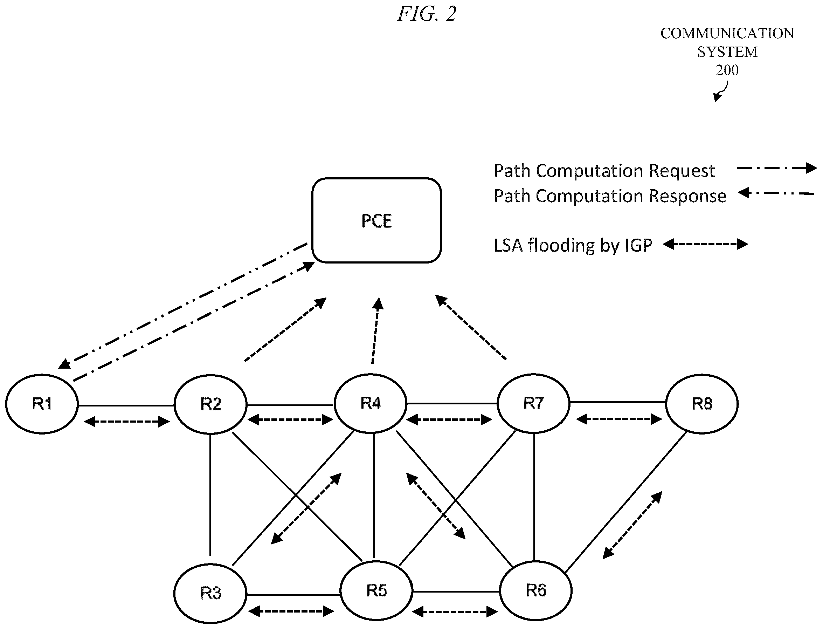

Source Routing, also called explicit path addressing, allows a head-end node to partially or completely specify the route the packet takes through the network. The head-end node discovers an explicit path for a packet flow through the network in advance of sending packets. The explicit path is "encoded" into the packet and transit nodes forward packet based on that path. Source Routing minimizes the states required in transit nodes to forward a packet, since each node only maintains forwarding information to one of its next-hops and is not require to maintain forwarding information to each possible packet destination. An example of a generic method of source routing, described within the context of FIG. 2, follows.

FIG. 2 depicts an example embodiment of a communication system configured to support source routing using source route compression based on use of address compression.

In FIG. 2, communication system 200 is similar to the communication system 100 of FIG. 1. The communication system 200 includes the same routers as in FIG. 1, and includes a Path Computation Element (PCE) configured to operate as the controller of FIG. 1.

In FIG. 2, for a generic method of source routing, assume that R1 (head-end node) decides to send a packet along the path R1-R2-R4-R7-R8. Assume that R1, R2, R3..., R8 are loopback addresses assigned as node identifiers. So, R1 encodes the explicit path with node identifiers as {R4, R7, R8} into the packet and sends to R2. When R2 receives the packet, it pops the first hop in the explicit path, which is R4. R2 then looks up the next-hop in the explicit path, which is R4, and forwards the packet to R4 with the explicit path in the packet as {R7, R8}. R4 pops the first hop in the explicit path, which is R7. R4 then looks up the next-hop in the explicit path, which is R7, and forwards the packet to R7 with the explicit path {R8}. When R7 receives the packet, it pops the first hop, which is R8 and forwards the packet to R8 without any explicit path. When R8 receives the packet the explicit path is empty, which means the packet has traversed the explicit path. R8 makes further forwarding decision on the packet based on its native header. As discussed further below, source routing may be performed using a loose source routing and/or a strict source routing.

In loose source routing, the head-end node can encode a set of nodes to be traversed and intermediate nodes along the path can choose among multiple paths to reach any nodes in the set of nodes. For example, in the example of the generic method of source routing described above, R2 may find the "optimal" path to R4 is via R2-R3-R4 instead of R2-R4. In this case, R2 will send the packet with explicit path {R3, R4, R7, R8} to R3. When R3 receives the packet and finds the first hop in the path as R3, it would pop R3 since R3 identifies itself. R3 further looks up the next-hop in the explicit path, which is R4, and sends the packet with explicit path {R4, R7, R8} to R4. So, when an explicit path contains one or more node identifier(s) then the path is called a loose source route since an intermediate node can choose one among the multiple paths to reach a node, which is a loopback address in that node.

In strict source routing, the head-end node can encode a set of hops to be traversed and intermediate nodes along the path forward based on the specified hops. For example, in the example of the generic method of source routing described above, R1 encodes a set of next-hop identifiers such as {R2->R4, R4->R7, R7->R8} to specify the path to be taken by the packet. Note that the first hop R1->R2 is not encoded into the path since it is already traversed when R1 forwards the packet on the R1->R2 link. When R2 receives the packet, it pops the first hop, which is R2->R4, from the path since it identifies a locally connected link. R2 then forwards the packet on R2->R4 link. When R4 receives the packet, it pops the first hop, which is R4->R7, from the path since it identifies a locally connected link. R4 forwards the packet on the R4->R7 link. When R7 receives the packet, it pops the first hop, which is R7->R8, from the path since it identifies a locally connected link. R7 forwards the packet without an explicit path on the R7->R8 link. In this manner, the exact path traversed by the packet is specified by the source node R1.

It will be appreciated, as indicated above, that a source node also may specify a mix of loose hops and strict hops. For example, in the example of the generic method of source routing described above, R1 can also specify a mix of strict and loose hops such as {R2->R4, R8}. It will be appreciated that strict source routing is preferable when a packet belonging to a service or application that needs to meet strict Quality of Service (QoS) or Service Level Agreement (SLA) and, thus, must follow a strict path. So, strict source routing is the default choice for source routing with traffic engineering (TE). A description of source routing with traffic engineering (SR-TE) follows.

In SR-TE, various TE parameters are assigned into the network elements (e.g., the nodes and links). The TE parameters of a network element describe the cost, delay, throughput, available bandwidth, packet loss characteristics of the network element. The topology and TE parameters of all network elements are learned and are maintained in a centralized TE Database (TEDB) hosted by a controller (e.g. a Path Computation Element (PCE), a Software Defined Networking (SDN) controller, or the like). The controller can learn TE and topology information by listening to link-state advertisements (LSAs) from the Interior Gateway Protocol (IGP) running among the routers (e.g., Intermediate-System-to-Intermediate-System (ISIS), Open Shortest Path First (OSPF), or the like). The controller can also gather such information from the routers, e.g., using Border Gateway Protocol - Link State (BGP-LS) such as in RFC 7752, using a push/pull mechanism or the like, as well as various combinations thereof.

In SR-TE, the head-end node classifies packets into flows based on application or a service. Each flow is associated with specific QoS requirement or SLA. The head-end node sends a request to the controller (e.g., PCE, SDN controller, or the like) to compute an optimal/explicit path that meets the specified QoS/SLA. The controller typically computes such a path by running Constraint Shortest Path First (CSPF) techniques on the TE DB. Once a path is allocated, the controller updates the dynamic TE state (e.g. residual bandwidth) of the network elements along that path into the TEDB. The head-end node sends all packets belonging to a flow over the explicit path that meets the QoS/SLA of the flow. The explicit path is encoded into the packet. Thus, it is possible that packets of different flows to same destination follow diversified paths. The per-flow states are maintained only at the head-end node and transit nodes are completely agnostic of a flow, the QoS/SLA needs of the flow, and so forth. This results in a significant reduction of cost and complexity at transit nodes.

In recent years, Source Routing, which was typically used for Internet Protocol version 4 (IPv4), has been revamped as Segment Routing (SR) by extending source routing capabilities into Multiprotocol Label Switching (MPLS) and IP version 6 (IPv6). In SR, the loopback address of a router is referred to as a "Prefix Segment" and next-hop adjacency/link between two routers is referred to as an "Adjacency Segment". In SR, each segment is assigned a Segment Identifier (SID), which is encoded into an explicit path to identify the segment. SR using an MPLS dataplane is described in RFC 8660 and SR using an IPv6 dataplane is described in RFC 8754. There is no explicit specification for SR using an IPv4 dataplane, since SR uses the IPv4 source routing described in the base IPv4 specification RFC 791. It is noted that, since SR includes SR-TE aspects, the term "SR" as used herein, unless indicated otherwise, includes SR-TE as well.

In SR using an MPLS dataplane, packet flows are enforced through a specific path by applying, at the ingress node, a specifically designed stack of segment identifiers (SIDs) fully compatible with the MPLS data plane. The stack of SIDs is referred to as a "segment list" and corresponds to the stack of labels in the MPLS architecture. The ingress router sends a packet with the list of SIDs (stack of labels) wherein each SID indicates a next-hop or router to be traversed by the packet. Only the top SID in the list is processed during packet forwarding by transit nodes. Each packet is forwarded along the shortest path toward the network element represented by the top SID. For example, a Prefix-SID can represent an Equal Cost Multipath (ECMP)-aware shortest-path to an IGP prefix (i.e., IGP-Prefix) which identifies a specific router (i.e., IGP-Node Segment). For example, an Adjacency-SID represents a hop over a specific adjacency between two nodes in the IGP (i.e., IGP-Adjacency Segment). A Prefix Segment is typically a multi-hop path while an Adjacency Segment, in most cases, is a one-hop path. Unlike traditional MPLS networks, SR maintains per-flow state only at the ingress node, where the segment list is applied. Therefore, no signaling protocol (e.g., Resource Reservation Protocol with traffic engineering extensions - RSVP-TE) is required to populate the forwarding table of transit nodes. In this way, a simplified control plane is employed, just relying on the IGP that is properly extended to advertise SIDs as additional attributes of LSAs. Thus, scalability of transit nodes is greatly improved, since MPLS Label Switch Paths (LSPs) state information is not required.

In SR using an IPv6 dataplane, similar to SR using an MPLS dataplane, packet flows are enforced through a specific path by applying, at the ingress node, a specifically designed stack of SIDs. In SR using an IPv6 dataplane, however, SIDs are encoded into the packet as IPv6 addresses assigned to Adjacency Segments or Node Segments.

In SR-TE, a strict-hop path would consist of a stack of Adjacency-SIDs where each such SID will designate a strict hop to be traversed. Thus, in SR, a packet traversing 30 strict next-hops will start from the head-end with a label stack of 30 labels in an MPLS dataplane and list of 30 IPv6 addresses in an IPv6 dataplane.

It is noted that, herein, generic source routing specific terminology, rather than SR-specific terminology, is primarily used. For example, a node or a link between two nodes, unless otherwise specified, may be generically referred to herein as a "network element" and a network element encoded in the source route, unless otherwise specified, may be generically referred to herein as a "hop" in the source routed path.

Various example embodiments for supporting source route compression for source routing may be configured to support source route compression for source routing based on use of address compression for source route compression. Various example embodiments for supporting source route compression for source routing based on use of address compression for source route compression may be configured to support source route compression for source routing based on use of substitute bit strings to provide address compression for source route compression. It will be appreciated that, although primarily presented with respect to use of substitute bit strings to support address compression to provide source route compression in source routing, in at least some example embodiments other types of address encoding information may be used to provide address compression for supporting source route compression in source routing.

Often a set of subsequent hops along a source routed path share a common prefix among their hop addresses. Such is the case in source routing with IPv4 or IPv6 since IP networks are assigned a subnet which is identified by a network prefix. For example, the IPv4 Prefix 10.10.10.0/24 is the subnet with IPv4 addresses 10.10.10.1-10.10.10.254. So, the addresses only differ in a range of bits (e.g., all addresses in 10.10.10.0/24 differ only in the bits range 24-32). This property is exploited to develop a simple but effective compression technique which offers very high compression of the source route encoded in the packet. A set of M number of subsequent hops sharing a common prefix is encoded as {address_of_first_hop, list of substitute_bit_strings for next {M-1} hops}. A substitute_bit_string is {first_bit_pos, last_bit_pos, bit_string}, wherein first_bit_pos (FBP) and last_bit_pos (LBP) indicate the range of bits within address_of_first_hop to be replaced with the bit_string. When any of the subsequent (M-1) hop receives the packet, it retrieves the identity of the next-hop by simply replacing the bits in address_of_first_hop as per the corresponding substitute_bit_string. This may be further understood by considering an example for IPv4 within the context of FIG. 2.

In the example for IPv4 within the context of FIG. 2, assume that the notation X->Y means the address of Y in the X-Y link. For example, the IP addresses may be assigned as follows: R2->R1 = 10.10.10.0, R1->R2 = 10.10.10.1, R4->R2 = 10.10.10.2, R2->R4 = 10.10.10.3, R7->R4 = 10.10.10.4, R4->R7 = 10.10.10.5, R8->R7 = 10.10.10.6, R7->R8 = 10.10.10.7. In this example, assume that the source routed path is R1->R2->R4->R7->R8. Without use of source route compression using address compression based on use of substitute bit strings, the source route would be encoded as {10.10.10.1, 10.10.10.3, 10.10.10.5, 10.10.10.7}, which is of size 4x4B=16B = 128 bits. With use of source route compression using address compression based on use of substitute bit strings, then the source route can be compressed as {address_of_first_hop = 10.10.10.1, {FBP=1, LBP=1, bit_string=1}, {FBP=1, LBP=2, bit_string=10}, {FBP=1, LBP=2, bit_string=11}. The FBP and LBP can be encoded in 5 bits to cover any bit position in the 32-bit IPv4 address. So, the size of the compressed route is 32 bits + {5 bits, 5 bits, 1 bit} + {5 bits, 5 bits, 2 bits} + {5 bits, 5 bits, 2 bits} = 67 bits. This simple example achieves 52.3% compression from 128 bits down to 67 bits. It will be appreciated that the various fields may be encoded using various other field encoding sizes.

In an IPv6 network, assume that the number of bits that differ among the addresses of M hops does not exceed 8 bits. In this case, the FBP and LBP fields are encoded with 7 bits (just to accommodate all bits of a 128 bit IPv6 address}, so substitute_bit_string can be encoded with 3B, which offers 3B/16Bx100= 81.25% compression on (M-1) hops. If a source route traverses the hops with addresses allocated from a single IPv6 subnet, then the entire source route gets approximately 81% compression. It will be appreciated that the various fields may be encoded using various other field encoding sizes.

It will be appreciated that various example embodiments for supporting source route compression for source routing based on use of address compression (e.g., based on use of substitute bit strings for address compression), although primarily described within the context of IP-based source routing, may be applied within the context of various other source routing technologies (e.g., IP, MPLS, Ethernet, or the like, as well as various combinations thereof). For example, in MPLS, the label stack can be compressed by encoding subsequent hops with substitute bit strings for the label assigned to the first hop. For example, in Ethernet, the MAC addresses can be compressed by encoding subsequent hops with substitute bit strings for the MAC addresses assigned to the first hop. It will be appreciated that various example embodiments for supporting source route compression for source routing based on use of address compression (e.g., based on use of substitute bit strings for address compression) may be applied within the context of various other source routing technologies.

Herein, unless indicated otherwise, the following terminology may be used for describing source route compression for source routing based on use of substitute bit strings. An SBS is a substitute_bit_string. An "Area" is a set of hops that share a common prefix, and a source route may span across one or more areas. A Compressed Source Route Block (CSRB) is the tuple that includes the address of first hop of an area traversed by a source route followed by the set of SBSs that represent the remaining hops in the area traversed by the source route. A Compressed Source Route (CSR), which is a compressed source route encoded with the techniques of using SBSs for source route compression, includes one or more CSRBs.

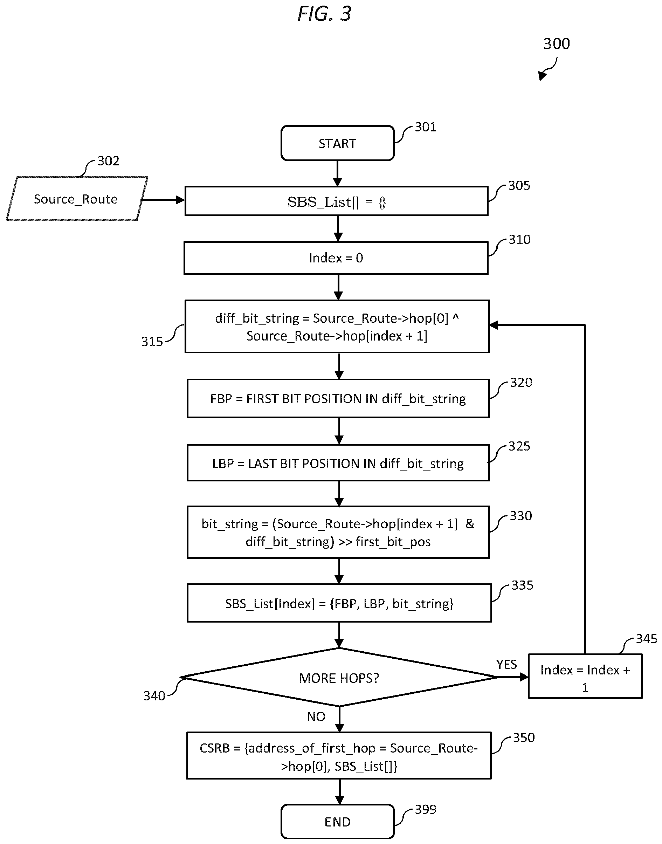

FIG. 3 depicts an example embodiment of a method for use by an ingress node of a source route to construct a CSR for use in packets communicated via the source route. In FIG. 3, for simplicity, it is assumed that the source route traverses only a single area so that the CSR includes only one CSRB; however, it will be appreciated that method 300 of FIG. 3 can be extrapolated to a source route spanning multiple areas (and, thus, having multiple CSRBs). It will be appreciated that, although primarily presented herein as being performed serially, at least a portion of the functions of method 300 may be performed contemporaneously or in a different order than as presented in FIG. 3. At block 301, the method 300 begins. As indicated by block 302, the input to the method 300 is a source route with the list of addresses of the hops to be traversed. Block 305 initializes an empty list to store SBS entries (denoted as SBS_List[]), and the method 300 then proceeds to block 310. Block 310 initializes an 'index' variable for indexing into SBS entries in the list, and the method 300 then proceeds to block 315. Block 315 computes a bit string that represents the bit positions in which the (index +1)th hop address differs from the address of the first hop. The bit string can be computed by bitwise XOR operation between the bits of the address of the first hop and bits of the address of the (index+1)th hop address. This bit string is termed as "diff_bit_string". From block 315, the method proceeds to block 320. Block 320 finds the first bit position (FBP) in diff_bit_string that is set to 1, and the method 300 then proceeds to block 325. Block 325 finds the last bit position (LBP) in diff_bit_string that is set to 1, and the method 300 then proceeds to block 330. Block 330 computes the bit string for the (index + 1)th hop by first performing a bitwise AND operation between the bits in the address of the first hop and bits in the address of the (index + 1)th hop, and then shifting the result by the number of bits equal to the FBP. From block 330, the method 300 proceeds to block 335. Block 335 encodes the SBS list entry at `index' by the tuple {FBP, LBP, bit string}, and the method 300 then proceeds to block 340. Block 340 checks if there are more hops in the source route that need to be encoded. If there are more hops in the source route that need to be encoded then the method 300 proceeds to block 345; otherwise, the method 300 proceeds to block 350. Block 345 increments the 'index' variable by one and the method 300 then returns to block 315 to repeat the subsequent steps for the subsequent hop address. Block 350 builds the CSRB from the address of the first hop and the list of SBS entries, and the method 300 then proceeds to block 399. At block 399, the method 300 ends.

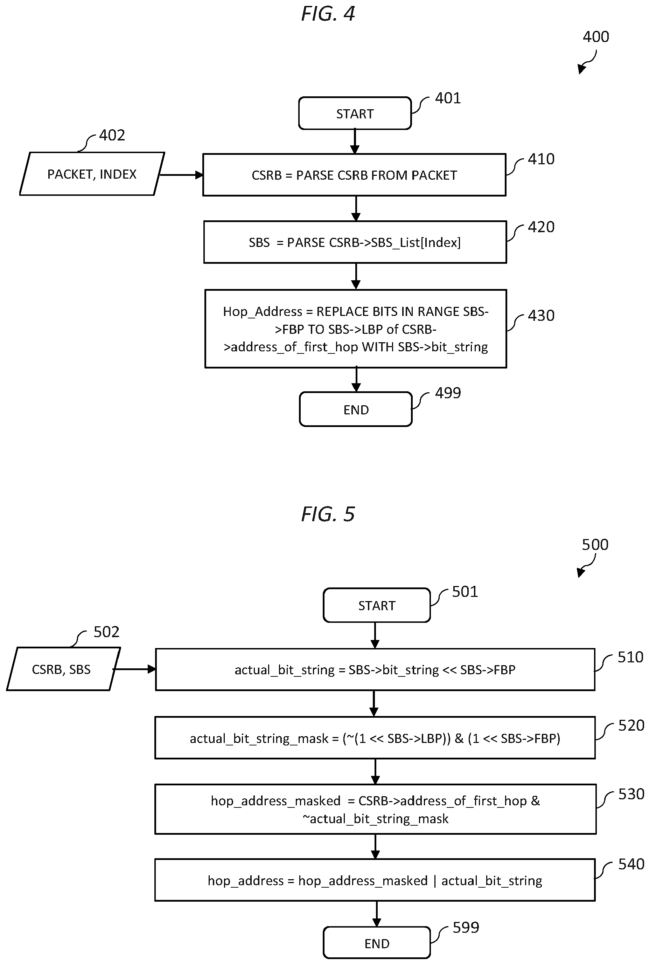

FIG. 4 depicts an example embodiment of a method for use by a transit node or an egress node of a source route to process a CSR included in a packet communicated via the source route. In FIG. 4, the method 400 enables the transit node or the egress node to generate the hop identifier from a specific SBS entry in a CSR encoded packet. In FIG. 4, for simplicity, it is assumed that the source route traverses only a single area so that the CSR includes only one CSRB; however, it will be appreciated that method 400 of FIG. 4 can be extrapolated to a source route spanning multiple areas (and, thus, having multiple CSRBs). It will be appreciated that, although primarily presented herein as being performed serially, at least a portion of the functions of method 400 may be performed contemporaneously or in a different order than as presented in FIG. 4. At block 401, the method 400 begins. As indicated by block 402, the inputs to the method 400 include a CSR encoded packet and an index to the SBS entry in the CSR that represents the next hop to be traversed by the packet. Block 410 parses the CSRB from the packet, and the method 400 then proceeds to block 420. Block 420 parses the SBS in the CSRB at the specified index, and the method 400 then proceeds to block 430. Block 430 generates the hop identifier by replacing the bits from SBS->FBP to SBS->LBP in the address of the first hop in the CSRB with the SBS->bit_string. It will be appreciated that the block 430 may be implemented based on the method of FIG. 5. At block 499, the method 400 ends.

FIG. 5 depicts an example embodiment of a method for use by a transit node or an egress node of a source route to generate a hop identifier within the context of processing a CSR included in a packet communicated via the source route. In FIG. 5, the method 500 enables the transit node or the egress node to generate the hop identifier from a specific SBS entry in a CSR encoded packet (and, more specifically, from a CSRB and SBS). In FIG. 5, for simplicity, it is assumed that the source route traverses only a single area so that the CSR includes only one CSRB; however, it will be appreciated that method 500 of FIG. 5 can be extrapolated to a source route spanning multiple areas (and, thus, having multiple CSRBs). It will be appreciated that the method 500 of FIG. 5 may be used to provide block 430 of the method 400 of FIG. 4. It will be appreciated that, although primarily presented herein as being performed serially, at least a portion of the functions of method 500 may be performed contemporaneously or in a different order than as presented in FIG. 5. At block 501, the method 500 begins. As indicated by block 502, the inputs to the method 500 include a CSRB and an SBS. Block 510 builds the actual bit string by shifting the bits of SBS->bit_string to the left by SBS->FBP bit positions. For example, if SBS ->bit_string is 101 and SBS->FBP is 3 then actual bit string is 101 << 3 = 101000. Block 520 creates the mask of the actual bit string as follows: (1) value_1 = shifts 1 to the left by SBS->FBP bit positions (e.g., if SBS->FBP is 3 then the value_1 is 1 << 3 = 1000), (2) value_2 = shifts 1 to the left by SBS->LBP bit positions (e.g., if SBS->LBP is 6 then the value_2 is 1 << 6 = 1000000), (3) value_3 = 1's complement of value_2 (e.g., ifvalue_2 is 1000000 then value_3 is 111111, and (4) mask of actual bit string = bitwise AND operation between value_1 and value_2 (e.g., if value_1 is 1000 and value_3 is 111111 then mask of actual bit string is 111000). The mask of the actual bit string represents the valid bit positions in the actual bit string. Block 530 zeroes out the bits in the CSRB->address_of_first_hop that are to be replaced with the actual bit string. This operation is performed by a bitwise AND operation between CSRB>address_of_first_hop with the 1's complement of the mask of actual bit string. For example, if CSRB->address_of_first_hop is 1011111101 and the mask of the actual bit string is 111000, then masked value of address of the first hop is 1011111101 & ~(111000) = 1011000101. Block 540 generates the hop address by a bitwise OR operation between the masked value of the address of the first hop and the actual bit string. For example, if the masked value of the address of the first hop is 1011000101 and the actual bit string is 101000, then the hop address is 1011000101 101000 = 1011101101. At block 599, the method 500 ends.

Various example embodiments for supporting source route compression for source routing may be configured to support source route compression for source routing, based on use of substitute bit strings for source route compression, in IPv4.

Various example embodiments for supporting support source route compression for source routing based on use of substitute bit strings for source route compression in IPv4 may be configured to implement the CSR as an IPv4 Option.

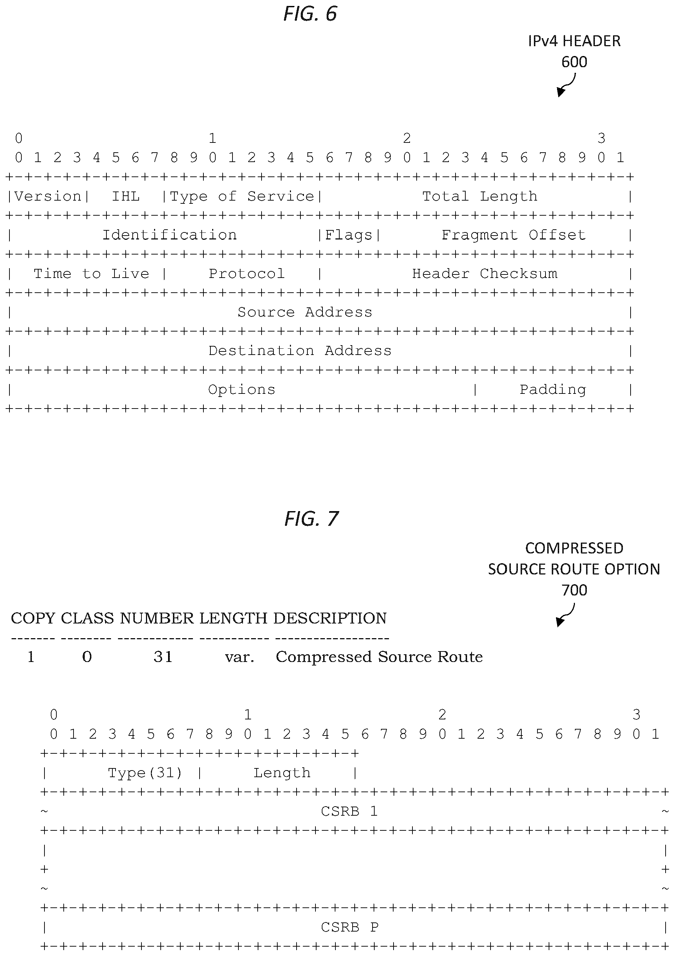

FIG. 6 depicts an example embodiment of an IPv4 Header including an IPv4 Option configured to support communication of a CSR based on substitute bit strings.

The IPv4 Header 600 includes various fields typically included in the IPv4 Header, including a Version field, an Internet Header Length (IHL) field, a Type of Service field, a Total Length field, an Identification field, a Flags field, a Fragment Offset field, a Time to Live field, a Protocol field, a Header Checksum field, a Source Address field, and a Destination Address field.

The IPv4 Header 600 also includes an Options field followed by a Padding field. IPv4 supports several types of Options which can be appended to the IPv4 Header. The Options provide for control functions needed or useful in some situations, but generally unnecessary for the most common communications. For example, the Options may include provisions for timestamps, security, and special routing. In general, all Options start with a 1-octet Type field followed by a type specific encoding. Options are of variable length. Thus, the minimum size of an Option is 1-octet (only Type is encoded) if it does not have any type specific data, whereas the maximum size of an Option is limited by the maximum permissible value of the IHL field in the IPv4 Header. The 1-octet Type field is viewed as having 3 fields as follows: (1) a 1 bit Copied Flag, (2) a 2 bit Option Class, and (3) a 5 bit Option Number. The Copied Flag indicates whether the Option is copied into all fragments on fragmentation (e.g., "0" means "not copied" and "1" means "copied". The Options Classes are: (a) 0 = control, (b) 1 = reserved for future use, (c) 2 = debugging and measurement, and (d) 3 = reserved for future use. The Padding field is used to round off the variable sized Options field to multiples of 4 octets. In at least some example embodiments, source route compression based on substitute bit strings that is implemented for IPv4 may be implemented using a newly defined IPv4 Option referred to herein as the Compressed Source Route (CSR) Option, which is defined further with respect to FIGs. 7 - 9 as discussed further below.

FIG. 7 depicts an example embodiment of a CSR Option configured to support source route compression based on SBSs for IPv4.

As illustrated in FIG. 7, the CSR Option 700 is defined such that Copy = 1, Class = 0, Number = 31, the Length is variable, and the Description is "Compressed Source Route". It will be appreciated that any other suitable Number may be reserved and used to identify the CSR Option.

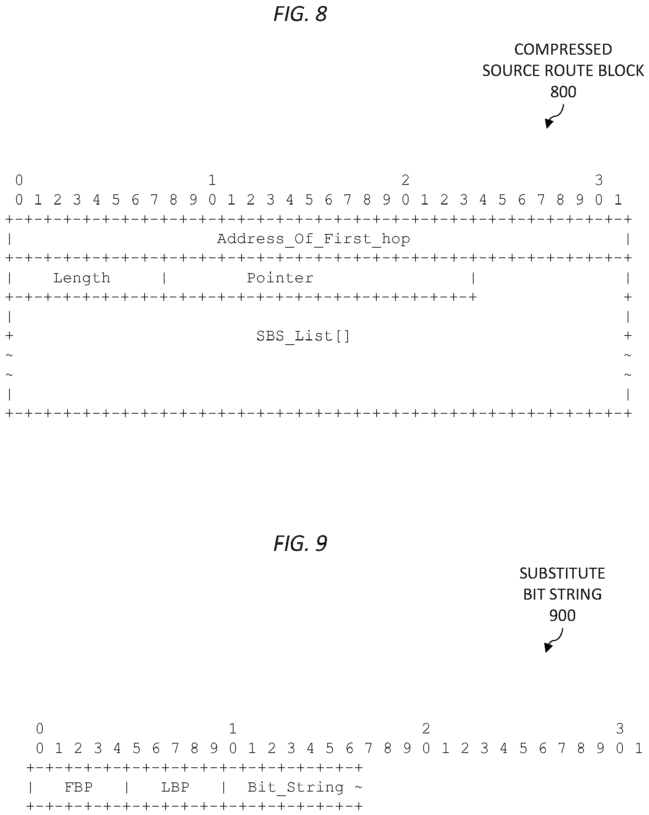

As illustrated in FIG. 7, the CSR Option 700 includes a Type field, a Length field, and a set of CSRB fields (denoted as CSRB 1 through CSRB P) which provide a list of CSRBs. The Type field is a 1-octet field that indicates that the IPv4 Option is a CSR Option in tuples of COPY, CLASS, and NUMBER. The Length field is a 1-octet field that indicates the length of the CSR Option including the Type octet, the Length octet, the octets in the list of CSRBs. The set of CSRB fields includes a list of CSRBs which encode the set of hops of the source routed path. An example embodiment of an encoding of a CSRB is presented with respect to FIG. 8.

FIG. 8 depicts an example embodiment of a CSRB for use in the CSR Option of FIG. 7. The CSRB encodes a set of addresses of a set of hops sharing a common address portion that enables compressed encoding based on use of substitute bit strings. The CSRB 800 includes an Address_of_First_Hop field, a Length field, a Pointer field, and an SBS_List [] field. The Address_of_First_Hop field is a 4-octet field that encodes the IPv4 address of the first hop in the set of hops to be encoded based on use of substitute bit strings. The Length field is a 1-octet field that indicates the length of the CSRB that includes the Address_Of_First_Hop octets, the Length octet, the Pointer octets, and octets in the SBS_List[]. The Pointer field is a 2-octet field that indicates the bit position in SBS_List[] which begins the next SBS to process. The pointer is relative to this option, and the smallest possible value for the Pointer is 56, which points to the area immediately after the Pointer field. The SBS_List[] is composed of a series of SBS entries that encode the substitute bit strings for the subsequent hops that share the common address portion that enables compressed encoding based on use of substitute bit strings. An example embodiment of an encoding of an SBS entry in the SBS_List is presented with respect to FIG. 9.

FIG. 9 depicts an example embodiment of an SBS entry for use in the CSRB of FIG. 8. The SBS entry 900 includes a First Bit Position (FBP) field, a Last Bit Position (LBP) field, and a Bit_String field. The FBP field is a 5-bit field that encodes the FBP. The LBP field is a 5-bit field that encodes the LBP. The Bit String field is a variable length field that encodes the bit string. The length of the bit string is (LBP - FBP + 1). When a router routes an IPv4 packet, it checks to see if the CSR Option is present in the IPv4 Header of the IPv4 packet. If the CSR Option is present in the IPv4 Header of the IPv4 packet, the router parses the SBS beginning at the bit position indicated by the Pointer and increments the Pointer by the number of bits of the SBS. If the Pointer exceeds the (Length x 8), then it means the CSRB is already traversed. Then, if there is a next CSRB in the CSR, the next CSRB is processed. The CSR Option is copied on fragmentation and, thus, is included in every fragment generated based on fragmentation.

It will be appreciated that implementation of the CSR as an IPv4 Option may be implemented in other ways.

Various example embodiments for supporting support source route compression for source routing based on use of substitute bit strings for source route compression in IPv4 may be configured to implement the CSR as an IPv4 Shim Protocol.

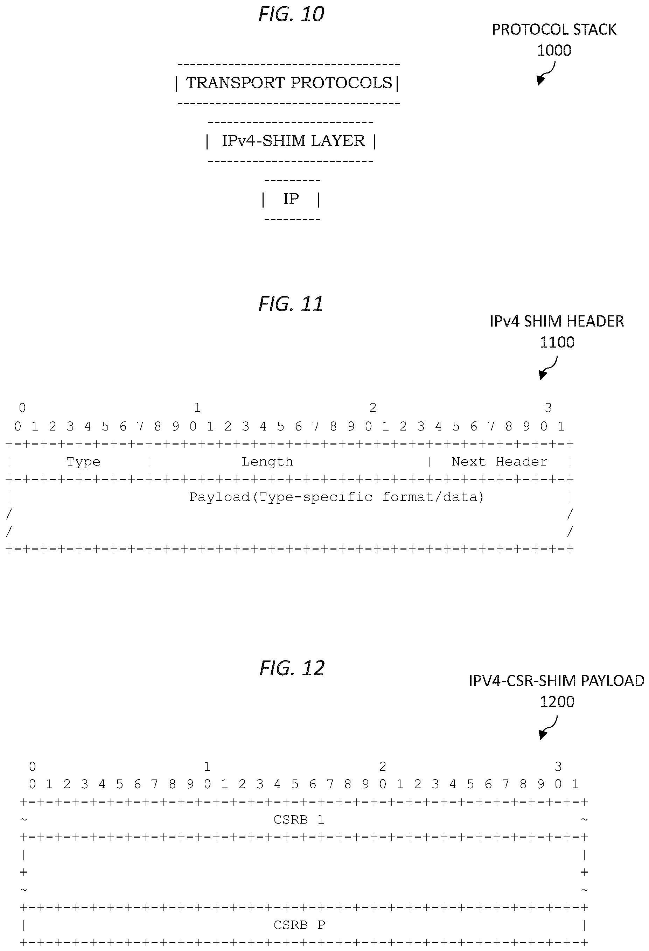

The IHL field in the IPv4 header has 4 bits, which represents the number of 32-bit words on the IPv4 Header, including the variable number of IPv4 Options. As a 4-bit field, the maximum value of IHL is 15 words (15x32 bits, or 480 bits = 60 bytes). The minimum value of IHL is 5, which indicates a length of 5x32 = 160 bits = 20 bytes, i.e. the fixed size of IPv4 Header excluding any IPv4 Options. This means that the maximum size of the IPv4 Options section of the IPv4 Header can be 60-20=40 bytes, which limits the size of CSR Option to 40 bytes. This can be a limitation if the set of hops of the source route cannot be encoded within the IPv4 Header in 40 bytes or less. Accordingly, in at least some example embodiments, the CSR may be encoded within an IPv4 packet using an IPv4 Shim Layer inserted between the IPv4 Header and the upper layer transport protocol header (e.g., Transmission Control Protocol (TCP), User Datagram Protocol (UDP), Internet Control Message Protocol (ICMP), or the like). An example embodiment for placement of the IPv4 Shim Layer within the protocol stack is presented with respect to FIG. 10.

FIG. 10 depicts an example embodiment of a protocol stack including an IPv4 Shim Layer configured to support communication of a CSR based on SBSs. The protocol stack 1000 includes an IPv4 Shim Layer disposed above the IP Layer and below the Transport Protocols Layer. The IPv4 Shim Layer is carried using a new IP Protocol number in the IPv4 Header, which can be reserved from the Protocol Numbers registry maintained by the Internet Assigned Numbers Authority (IANA). For example, the IP Protocol Number for the IPv4 Shim Layer may be 145 or any other suitable number. The IPv4 Shim Layer is generic and can carry any "enhancement" related to the underlying IP Layer, including a CSR, which supports compression of a source route based on substitute bit strings, as indicated above. It is noted that the IPv4 Shim Layer is expected to be inspected by a router that corresponds to the destination address of the IP packet or based on a determination that the Router Alert Option is set in the IPv4 Header. The IPv4 Shim Layer may use an IPv4 Shim Header configured to transport the CSR. An example embodiment of an IPv4 Shim Header for use at the IPv4 Shim Layer to encode a CSR is presented with respect to FIG. 11.

FIG. 11 depicts an example embodiment of an IPv4 Shim Header configured for use at the IPv4 Shim Layer of FIG. 10. The IPv4 Shim Header 1100 includes a Type field, a Length field, a Next Header field, and a Payload field. The IPv4 Shim Protocol is defined as generic and, as such the IPv4 Shim Header 1100 may carry different "types" therein. The Type field is an 8-bit field that encodes the "type" being transported within the IPv4 Shim Header. The type for IPv4-CSR may be defined as Type 16 (IPv4-Compressed-Source-Route (IPv4-CSR)) or using any other suitable type value. Herein, unless indicated otherwise, "IPv4-CSR-Shim Header" would mean the IP Shim Header Type 16. The Length field is a 16-bit field that carries the length of the payload in octets (the octets of the Type, Length and Next Header fields are excluded). The Next Header field includes an indication of the IP Protocol type of the header next to the IPv4 Shim Header (e.g., TCP, UDP, ICMP, or the like). The Payload field includes the type specific format (namely, the payload format for Type 16). The Payload includes one or more CSRBs. An example embodiment of a Payload for an IPv4 Shim Header is presented with respect to FIG. 12.

FIG. 12 depicts an example embodiment of a Payload configured for use in the IPv4 Shim Header of FIG. 11. The IPv4-CSR-Shim Payload 1200 includes one or more CSRBs. The originator an IPv4-CSR-Shim Header may also insert the Router Alert Option into the IPv4 Header so that each router will inspect the IPv4-CSR-Shim Header. When a router routes an IPv4 packet that includes the Router Alert Option, the router checks to see if the IPv4-CSR-Shim Header is present. If the IPv4-CSR-Shim Header is present, the router evaluates each CSRB in the CSR sequentially to find the next CSRB to process. If the Pointer in a CSRB is greater than (Length x 8), then the CSRB is considered to be traversed. Then, if there is a next CSRB in the CSR, then the next CSRB is processed. The router then parses from the CSRB the offset value beginning at the octet indicated by the Pointer and increments the Pointer by the length of SBS. The IPv4-CSR-Shim Header is copied on fragmentation and, thus, is included in each fragment resulting from fragmentation.

It will be appreciated that implementation of the CSR as an IPv4 Shim Protocol may be implemented in various other ways.

It will be appreciated that implementation of source route compression for source routing, based on use of substitute bit strings for source route compression, in IPv4 may be implemented in various other ways.

Various example embodiments for supporting source route compression for source routing may be configured to support source route compression for source routing, based on use of substitute bit strings for source route compression, in IPv6.

Various example embodiments for supporting support source route compression for source routing based on use of substitute bit strings for source route compression in IPv6 may be configured to implement the CSR as an IPv6 Extension Header.

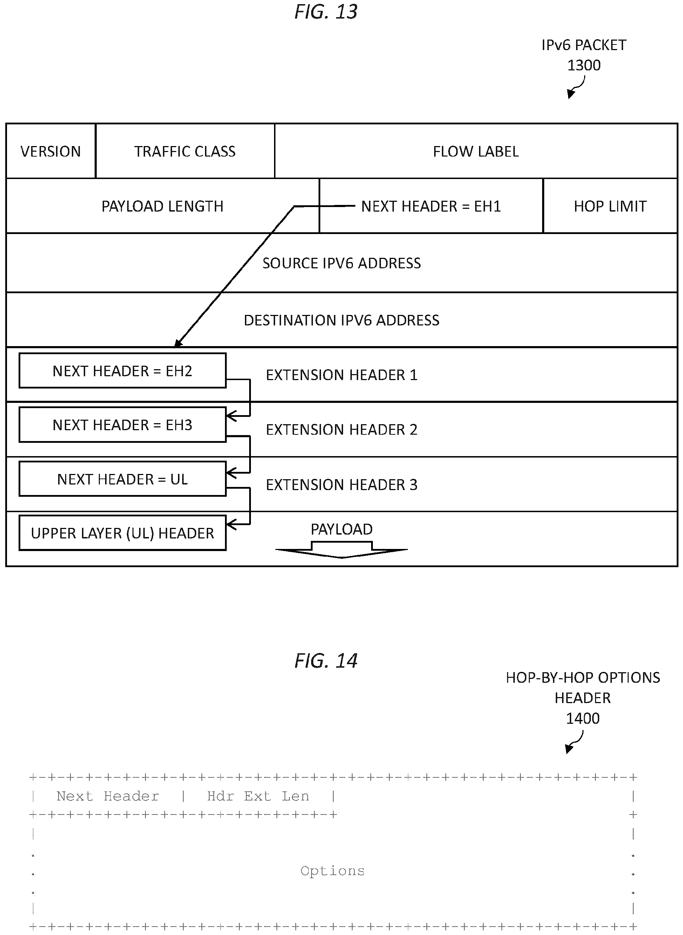

FIG. 13 depicts an example embodiment of an IPv6 packet including an IPv6 Header that includes a set of IPv6 Extension Headers configured to support communication of a CSR based on substitute bit strings.

The IPv6 packet 1300 includes an IPv6 Header and a payload. The IPv6 Header includes a main IPv6 Header, a set of IPv6 EHs, and an Upper Layer (UL) Header field.

The main IPv6 Header includes various fields typically included in the main IPv6 Header, including a Version field, a Traffic Class field, a Flow Label field, a Payload Length field, a Next Header field, a Hop Limit field, a Source IPv6 Address field, and a Destination IPv6 Address field.

The main IPv6 Header remains fixed in size (40 bytes), while customized IPv6 EHs may be added as needed. The IPv6 EHs provide for control functions needed or useful in some situations, but unnecessary for the most common communications. The IPv6 EHs typically include provisions for timestamps, security, and special routing.

Each IPv6 EH starts with a 1-octet Next Header field, followed by its own body. The format of the body is dependent on the type of EH. The Next Header field of an EH points to the type of the next EH. So, multiple EHs are chained together by their Next Header fields. The Next Header field on the last EH in the chain indicates the payload type of the payload of the IPv6 packet.

One type of IPv6 EH is the Hop-by-Hop Options Header, which can be used to carry optional information that must be examined by every router along the delivery path of the IPv6 packet. The Hop-by-Hop Options Header is identified by the value of 0 in the Next Header field of the IPv6 Header. This IPv6 EH is generic and multiple options can be defined within it. So, any special directive to be examined by every transit router of an IPv6 packet is defined as an option within the Hop-by-Hop Options Header. The format of the Hop-by-Hop Options Header is presented in FIG. 14.

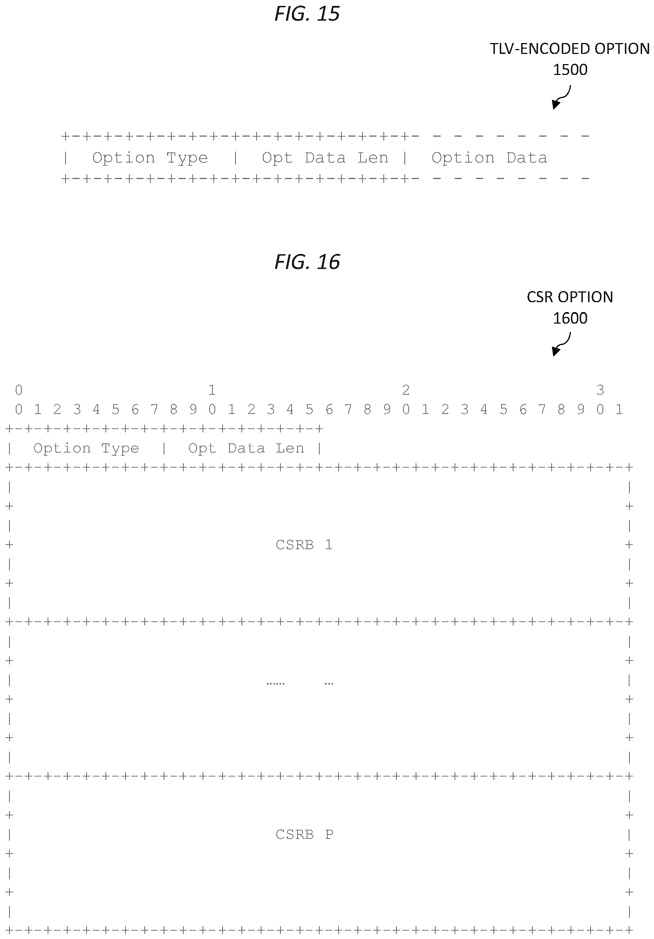

FIG. 14 depicts an example embodiment of a Hop-by-Hop Options Header for use as in IPv6 Extension Header in the IPv6 packet of FIG. 13. The Hop-by-Hop Options Header includes a Next Header field, a Header Extension Length field, and an Options field. The Next Header field is an 8-bit selector that identifies the type of header immediately following the Hop-by-Hop Options Header. The Header Extension Length field is an 8-bit unsigned integer which specifies the length of the Hop-by-Hop Options Header in 8-octet units, excluding the first 8 octets. The Options field is a variable-length field, of length such that the complete Hop-by-Hop Options Header is an integer multiple of 8 octets long, that includes one or more TLV-encoded options. The format of the TLV encoded option for the Hop-by-Hop Options Header is presented in FIG. 15.

FIG. 15 depicts an example embodiment of a TLV-encoded option for use in the Hop-by-Hop Options Header of FIG. 14.

The TLV-encoded option 1500 includes an Option Type field, an Option Data Length field, and an Option Data field. The Option Type field includes an 8-bit identifier of the type of option. The Option Data Length field is an 8-bit unsigned integer that encodes the length of the Option Data field of the option in octets. The Option Data field is a variable-length field that encodes option type specific data. It is noted that the sequence of options within a header is expected to be processed strictly in the order of appearance in the header (e.g., a receiver will not, for example, scan through the header looking for a particular kind of option and process that option prior to processing all of the preceding options).

The Option Type identifiers are internally encoded such that the highest-order two bits of the Option Type specify the action to be taken if the processing IPv6 node does not recognize the Option Type and the third-highest-order bit of the Option Type specifies whether or not the Option Data of that option can change en-route to the final destination of the packet.

The Option Type identifiers are internally encoded such that the highest-order two bits of the Option Type specify the action to be taken if the processing IPv6 node does not recognize the Option Type. For example, the Option Type identifiers may be internally encoded with the highest-order two bits as follows: (a) 00 = skip over this option and continue processing the header, (b) 01 = discard the packet, (c) 10 = discard the packet and, regardless of whether or not the Destination Address of the packet was a multicast address, send an ICMP Parameter Problem, Code 2, message to the Source Address of the packet, pointing to the unrecognized Option Type, and (d) 11 = discard the packet and, only if the Destination Address of the packet was not a multicast address, send an ICMP Parameter Problem, Code 2, message to the Source Address of the packet, pointing to the unrecognized Option Type.

The Option Type identifiers are internally encoded such that the third-highest-order bit of the Option Type specifies whether or not the Option Data of that option can change en-route to the final destination of the packet. When an Authentication header (another type of EH that carries an authentication digest of the packet) is present in the packet, for any option whose data may change en-route, its entire Option Data field will be treated as zero-valued octets when computing or verifying the authenticating digest of the packet. Here, a value of "0" may indicate that the Option Data does not change en-route and a value of "1" may indicate that the Option Data may change en-route.

It is noted that the three higher-order bits described above are to be treated as part of the Option Type, not independent of the Option Type. That is, a particular option is identified by a full 8-bit Option Type, not just the low-order 5 bits of an Option Type.

It is further noted that a new Option Type may be defined for the Hop-by-Hop Option Header

In at least some example embodiments, source route compression based on substitute bit strings that is implemented for IPv6 may be implemented using a newly defined Option Type, defined for the Hop-by-Hop Option Header, referred to herein as the Compressed Source Route (CSR) Option, which is defined further with respect to FIGs. 16 - 18 as discussed further below.

FIG. 16 depicts an example embodiment of a CSR Option configured to support source route compression based on SBSs for IPv6.

The CSR Option 1600 includes an Option Type field, an Option Data Length field, a Reserved field, and a set of CSRB fields (denoted as CSRB 1 through CSRB P) which provide a list of CSRBs.

The Option Type field encodes the option type that indicates that the option is a CSR option. The two highest-order bits are encoded with "10", which indicates to discard the packet and, regardless of whether or not the Destination Address of the packet was a multicast address, send an ICMP Parameter Problem, Code 2, message to the Source Address of the packet, pointing to the unrecognized Option Type. The third highest order bit is encoded with "1", which indicates that the Option Data may change en-route, because the content of the CSR changes at each router/hop. The remaining 5-bits are assigned the value 10010, which results in the value of Option Type field as 0x32.

The Option Data Length field is a 1-octet field that indicates the length of the remaining bytes in the CSR Option.

The Reserved field is a 1-octet field that is reserved for future use. The sender will set this field to 0 and the receiver will ignore this field.

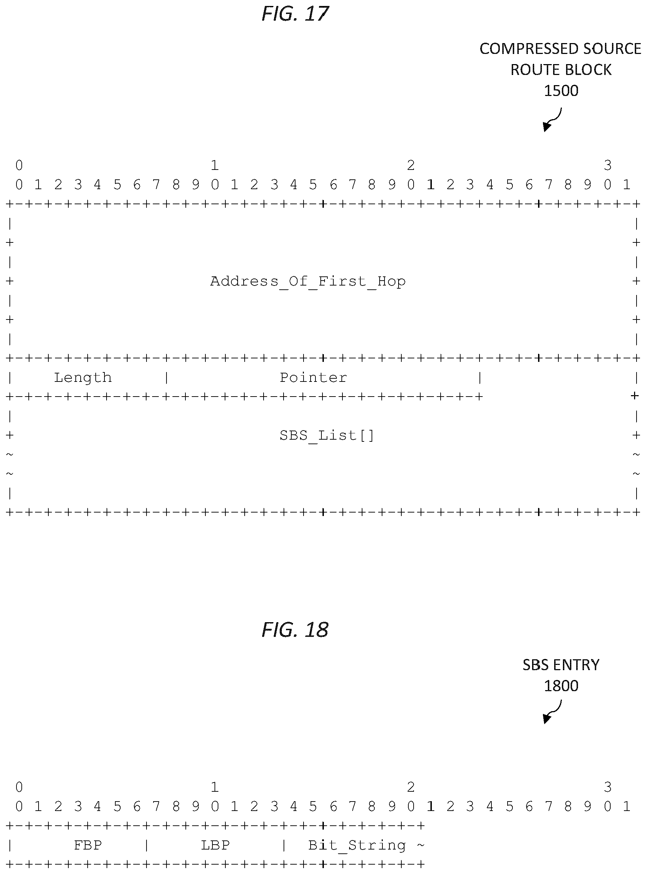

The set of CSRB fields includes a list of CSRBs which encode the set of hops of the source routed path. An example embodiment of an encoding of a CSRB is presented with respect to FIG. 17.

FIG. 17 depicts an example embodiment of a CSRB for use in the CSR Option of FIG. 16. The CSRB encodes a set of addresses of a set of hops sharing a common address portion that enables compressed encoding based on use of substitute bit strings. The CSRB 1700 includes an Address_of_First_Hop field, a Length field, a Pointer field, and an SBS_List [] field. The Address_of_First_Hop field is a 16-octet field that encodes the IPv6 address of the first hop in the set of hops to be encoded based on use of substitute bit strings. The Length field is a 1-octet field that indicates the length of the CSRB that includes the Address_Of_First_Hop octets, the Length octet, the Pointer octets, and octets in the SBS_List[]. The Pointer field is a 2-octet field that indicates the bit position in SBS_List[] which begins the next SBS to process. The pointer is relative to this option, and the smallest possible value for the Pointer is 154, which points to the area immediately after the Pointer field. The SBS _List[] is composed of a series of SBS entries that encode the substitute bit strings for the subsequent hops that share the common address portion that enables compressed encoding based on use of substitute bit strings. An example embodiment of an encoding of an SBS entry in the SBS_List is presented with respect to FIG. 18.

FIG. 18 depicts an example embodiment of an SBS entry for use in the CSRB of FIG. 17. The SBS entry 1800 includes a First Bit Position (FBP) field, a Last Bit Position (LBP) field, and a Bit_String field. The FBP field is a 7-bit field that encodes the FBP. The LBP field is a 7-bit field that encodes the LBP. The Bit String field is a variable length field that encodes the bit string. The length of the bit string is (LBP - FBP + 1). When a router routes an IPv6 packet, it checks to see if the CSR Option is present in the IPv6 Header of the IPv6 packet. If the CSR Option is present in the IPv6 Header of the IPv6 packet, the router parses the SBS beginning at the bit position indicated by the Pointer and increments the Pointer by the number of bits of the SBS. If the Pointer exceeds the (Length x 8), then it means the CSRB is already traversed. Then, if there is a next CSRB in the CSR, the next CSRB is processed. The CSR Option is copied on fragmentation and, thus, is included in every fragment generated based on fragmentation.

It will be appreciated that implementation of the CSR as an IPv6 Extension Header may be implemented in various other ways.

Various example embodiments for supporting support source route compression for source routing based on use of substitute bit strings for source route compression in IPv6 may be configured to implement the CSR as an IPv6 Shim Protocol.

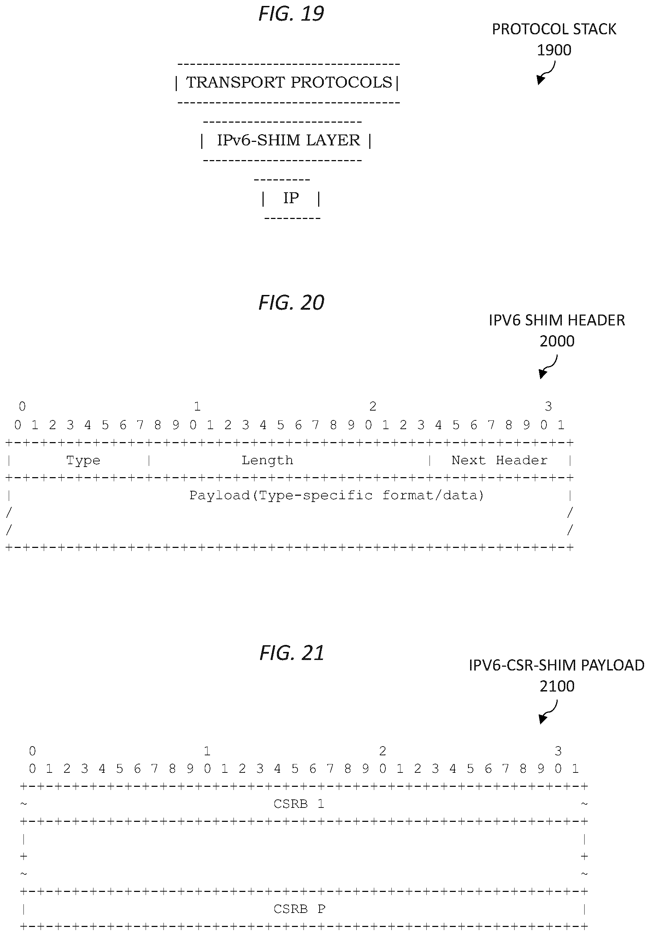

FIG. 19 depicts an example embodiment of a protocol stack including an IPv6 Shim Layer configured to support communication of a CSR based on SBSs. The protocol stack 1900 includes an IPv6 Shim Layer disposed above the IP Layer and below the Transport Protocols Layer. The IPv6 Shim Layer is carried using a new IP Protocol number in the IPv6 Header, which can be reserved from the Protocol Numbers registry maintained by the IANA. For example, the IP Protocol Number for the IPv6 Shim Layer may be 146 or any other suitable number. The IPv6 Shim Layer is generic and can carry any "enhancement" related to the underlying IP Layer, including a CSR, which supports compression of a source route based on substitute bit strings, as indicated above. It is noted that the IPv6 Shim Layer is expected to be inspected by a router that corresponds to the destination address of the IP packet or based on a determination that the Router Alert Option is set in the IPv6 Header. The IPv6 Shim Layer may use an IPv6 Shim Header configured to transport the CSR. An example embodiment of an IPv6 Shim Header for use at the IPv6 Shim Layer to encode a CSR is presented with respect to FIG. 20.

FIG. 20 depicts an example embodiment of an IPv6 Shim Header configured for use at the IPv6 Shim Layer of FIG. 19. The IPv6 Shim Header 2000 includes a Type field, a Length field, a Next Header field, and a Payload field. The IPv6 Shim Protocol is defined as generic and, as such the IPv6 Shim Header 2000 may carry different "types" therein. The Type field is an 8-bit field that encodes the "type" being transported within the IPv6 Shim Header. The type for IPv6-CSR may be defined as Type 17 (IPv6-Compressed-Source-Route (IPv6-CSR)) or using any other suitable type value. Herein, unless indicated otherwise, "IPv6-CSR-Shim Header" would mean the IP Shim Header Type 17. The Length field is a 16-bit field that carries the length of the payload in octets (the octets of the Type, Length and Next Header fields are excluded). The Next Header field includes an indication of the IP Protocol type of the header next to the IPv6 Shim Header (e.g., TCP, UDP, ICMP, or the like). The Payload field includes the type specific format (namely, the payload format for Type 17). The Payload includes one or more CSRBs. An example embodiment of a Payload for an IPv6 Shim Header is presented with respect to FIG. 21.

FIG. 21 depicts an example embodiment of a Payload configured for use in the IPv6 Shim Header of FIG. 20. The IPv6-CSR-Shim Payload 2100 includes one or more CSRBs. The originator an IPv6 Shim Header may also insert the Router Alert Option into the IPv6 Header so that each router will inspect the IPv6 Shim Header. When a router routes an IPv6 packet that includes the Router Alert Option, the router checks to see if the IPv6 Shim Header is present. If the IPv6 Shim Header is present, the router evaluates each CSRB in the CSR sequentially to find the next CSRB to process. If the Pointer in a CSRB is greater than the Length, then the CSRB is considered to be traversed. Then, if there is a next CSRB in the CSR, then the next CSRB is processed. The router then parses from the CSRB the next SBS beginning at the bit indicated by the Pointer and increments the Pointer by the number of bits in SBS. The IPv6 Shim Header is copied on fragmentation and, thus, is included in each fragment resulting from fragmentation.

It will be appreciated that implementation of the CSR as an IPv6 Shim Protocol may be implemented in various other ways.

It will be appreciated that implementation of source route compression for source routing, based on use of substitute bit strings for source route compression, in IPv6 may be implemented in various other ways.

Various example embodiments for supporting source route compression for source routing may be configured to support source route compression for source routing, based on use of substitute bit strings for source route compression, in MPLS.

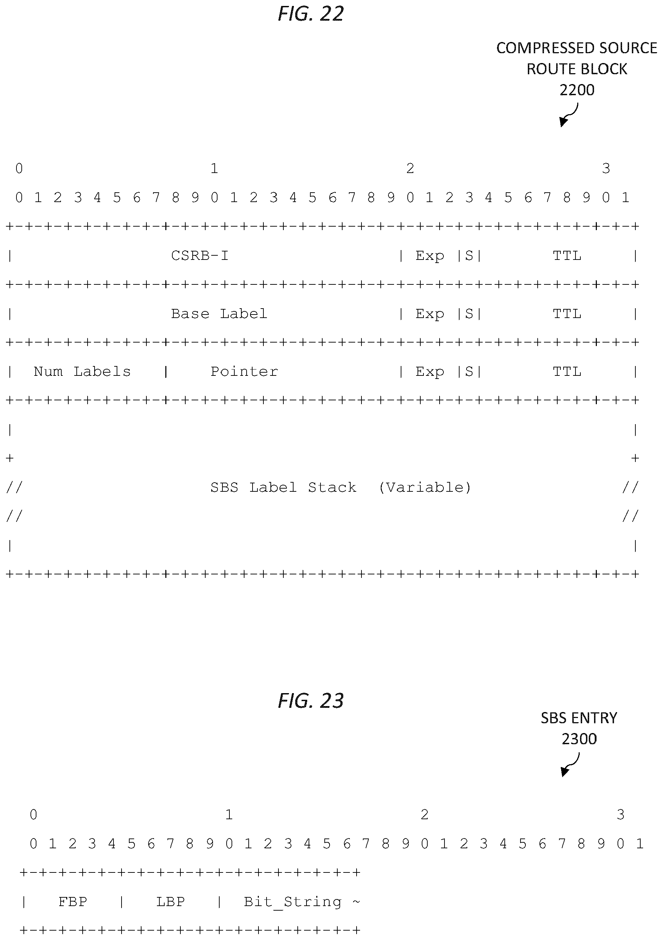

In an MPLS-based source routed network (e.g., Segment Routing (SR) using the MPLS data plane), each CSRB is an independent stack of labels. So, a CSR is composed of one or more labels stacks of one or more CSRBs (consecutive label stacks in the case of multiple CSRBs). An example embodiment of a CSRB for use in an MPLS network is presented in FIG. 22.

FIG. 22 depicts an example embodiment of a CSRB configured to support source route compression based on SBSs for MPLS. The CSRB 2200 includes a CSRB Indicator (CSRB-I) label, a Base Label label, a CSRB Descriptor label, and an SBS Label Stack.

The CSRB-I label enables routers to unambiguously distinguish between CSRB labels and non-CSRB labels. When a CSRB is embedded within a MPLS label stack consisting of "other" labels, a receiving router must be able to distinguish unambiguously between the CSRB and non-CSRB labels. To accomplish this, the CSRB-I label may be inserted immediately preceding the CSRB, where preceding means closer to the top of the label stack (farther from bottom of stack indication). The CSRB-I is a special label that is not expected to be used for any other purposes. The CSRB-I label includes a CSRB-I value field, an EXP field, an S field, and a TTL field. The CSRB-I value field includes a value configured to indicate that the MPLS label is a CSRB-I label. If standardized in the IETF, the CSRB-I value can be reserved in the IANA registry on Special-purpose labels. The EXP and TTL fields in CSRB-I label will be set to 0 and a receiving router should ignore these fields. The sending and receiving routers of the CSRB-I may use the EXP field of the label underneath the CSRB-I label for mapping to the appropriate forwarding class. The S-bit in CSRB-I label will be set to 0 since other labels of the CSRB follow.

The Base Label label follows the CSRB-I label. The Base Label label includes a Base Label field, an EXP field, an S field, and a TTL field. The Base Label field includes the address of the first hop (Address_Of_First_Hop) for the SBS_List[] included in the CSRB. The EXP and TTL fields in the Base Label label will be set to the desired value. The S-bit in the Base Label label will be set to 0 since other labels of the CSRB follow.

The CSRB Descriptor label follows the Base Label label. The CSRB Descriptor Label is a special label that describes the Number of Labels in the SBS Label Stack and the Pointer to the next SBS in the SBS Label Stack. The CSRB Descriptor label includes a Number of Labels field, a Pointer field, an EXP field, an S field, and a TTL field. The Number of Labels field in the CSRB Descriptor Label is an 8-bit field that indicates the number of labels in the SBS Label Stack. The Pointer field is a 12-bit field that indicates the bit position in the SBS Label Stack that is the beginning of the SBS that indicates the next hop. The EXP and TTL fields of the CSRB Descriptor label will be set to 0 by the originator of the CSRB and will be ignored by the receiver of the CSRB. The S-bit in the CSRB Descriptor label will be set to 0 since other labels of the CSRB (describing the offsets) follow.

The SBS Label Stack follows the CSRB Descriptor label. The SBS Label Stack is the body of the CSRB that includes the SBS_List[]. In the SBS Label Stack, each label may be extended to 32-bits by overwriting the EXP, S-bit, and TTL fields as the latter three fields are not necessary. The SBS Label Stack is composed of a series of SBS entries. An example embodiment of an encoding of an SBS entry in the SBS _List[] is presented with respect to FIG. 23.

FIG. 23 depicts an example embodiment of an SBS entry for use in the CSRB of FIG. 22. The SBS entry 2300 includes a First Bit Position (FBP) field, a Last Bit Position (LBP) field, and a Bit String field. The FBP field is a 5-bit field that encodes the FBP. The LBP field is a 5-bit field that encodes the LBP. The Bit_String field is a variable length field that encodes the bit string. The length of the bit string is (LBP - FBP + 1). The SBS _List[] is rounded off to multiples of MPLS labels.

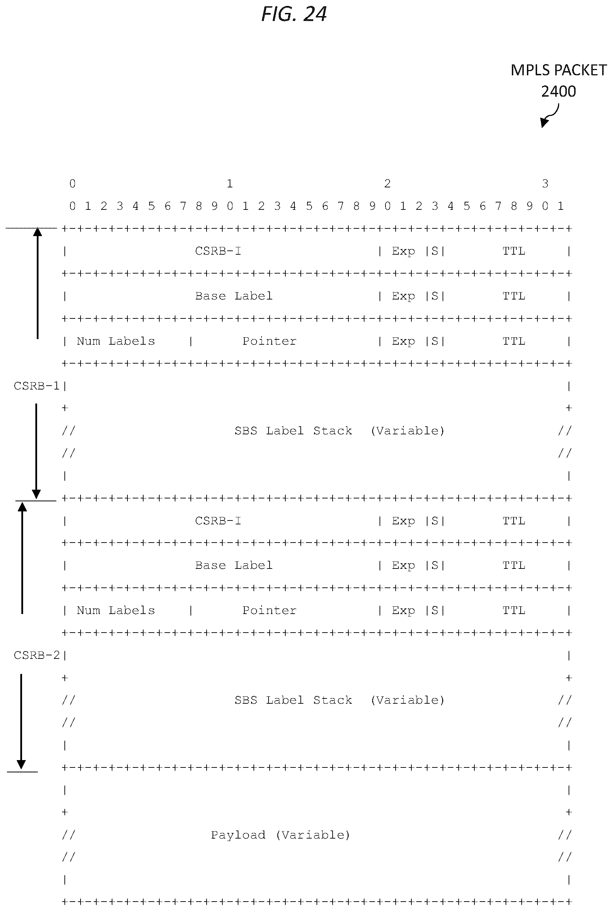

FIG. 24 depicts an example embodiment of an MPLS packet with a CSR including two CSRB label stacks associated with two areas spanned by the CSR. As depicted in FIG. 24, the MPLS packet 2400 includes a first CSRB (denoted as CSRB-1) associated with the first area spanned by the CSR, a second CSRB (denoted as CSRB-2) associated with the second area spanned by the CSR, and an associated payload.

It will be appreciated that implementation of source route compression for source routing, based on use of substitute bit strings for source route compression, in MPLS may be implemented in various other ways.

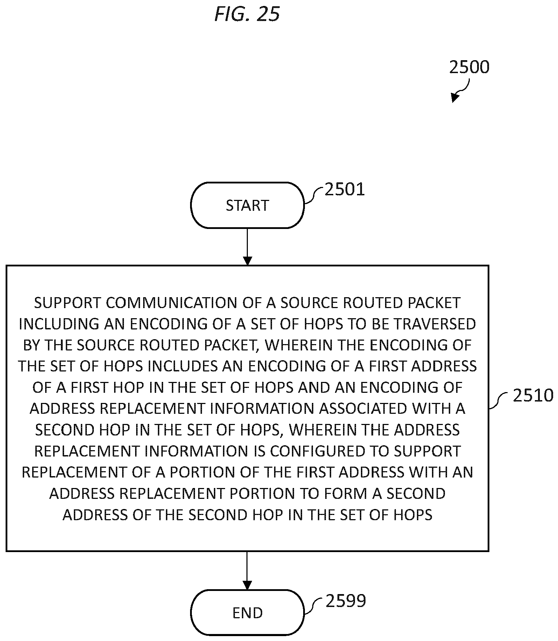

FIG. 25 depicts an example embodiment of a method for supporting communication based on use of address compression for source route compression in source routing. It will be appreciated that, although primarily presented herein as being performed serially, at least a portion of the functions of method 2500 may be performed contemporaneously or in a different order than as presented in FIG. 2. At block 2501, the method 2500 begins. At block 2510, support communication of a source routed packet including an encoding of a set of hops to be traversed by the source routed packet, wherein the encoding of the set of hops includes an encoding of a first address of a first hop in the set of hops and an encoding of address replacement information associated with a second hop in the set of hops, wherein the address replacement information is configured to support replacement of a portion of the first address with an address replacement portion to form a second address of the second hop in the set of hops. At block 2599, the method 2500 ends.

It will be appreciated that, although various example embodiments for supporting source route compression based on address compression are primarily presented herein within the context of unicast routing using source routing techniques, various example embodiments for supporting source route compression based on use of address compression also may be applied within the context of multicast routing using source routing techniques. It is noted that, in multicast, source routing is often referred to as stateless multicast where the source route includes the list of all network elements in the stateless multicast tree and each node in the stateless multicast tree inspects each entry in the source route to find directly connected network elements and replicate the source routed packet to the directly connected network elements for distribution of source routed packets across the stateless multicast tree.

It will be appreciated that, although various example embodiments for supporting source route compression based address compression are primarily presented herein within the context of specific types of packet switching technologies, various example embodiments for supporting source route compression based on use of address compression also may be applied within the context of various other packet switching technologies.

Various example embodiments for supporting source route compression based on address compression may provide various advantages or potential advantages. For example, various example embodiments for supporting source route compression may be configured to support generic source route compression for various packet switching technologies. For example, various example embodiments for supporting source route compression may be configured to support generic source route compression for various packet switching technologies with minimal data plane changes. For example, various example embodiments for supporting source route compression may be configured to support generic and efficient source route compression while imposing optimal overhead in packets for encoding source routes in packets. For example, various example embodiments for supporting source route compression may be configured to support header compression in the range of up to 45.3%-70.83% for SR-MPLS (which is significant given that a packet traversing 30 strict hops would normally account for 120B of overhead on the packet which would result in an 8% overhead penalty on a 1500B standard MTU size packet (e.g., an immediate loss of 800 megabits per second on a 10 gigabit per second link) or a 23.4% overhead penalty on a 512B packet (e.g., an immediate loss of 2.3 gigabits per second on a 10 gigabit per second link)). For example, various example embodiments for supporting source route compression may be configured to support header compression in the range of up to 45.3%-70.83% for SR-IPv4 (which is significant given that a packet traversing 30 strict hops would normally account for 120B of overhead on the packet which would result in an 8% overhead penalty on a 1500B standard MTU size packet (e.g., an immediate loss of 800 megabits per second on a 10 gigabit per second link) or a 23.4% overhead penalty on a 512B packet (e.g., an immediate loss of 2.3 gigabits per second on a 10 gigabit per second link)). For example, various example embodiments for supporting source route compression may be configured to support header compression in the range of up to 84% to 90.2% for SR-IPv6 (which is significant given that a packet traversing 30 strict hops would normally account for 480B of overhead on the packet which would result in a 32% overhead penalty on a 1500B standard MTU size packet (e.g., an immediate loss of 3.2 gigabits per second on a 10 gigabit per second link) or a 93.2% overhead penalty on a 512B packet (e.g., an immediate loss of 9.32 gigabits per second on a 10 gigabit per second link)). For example, various example embodiments for supporting source route compression may be configured to support header compression of up to 29% for SR with Ethernet. Various example embodiments for supporting source route compression based on address compression may provide various other advantages or potential advantages.

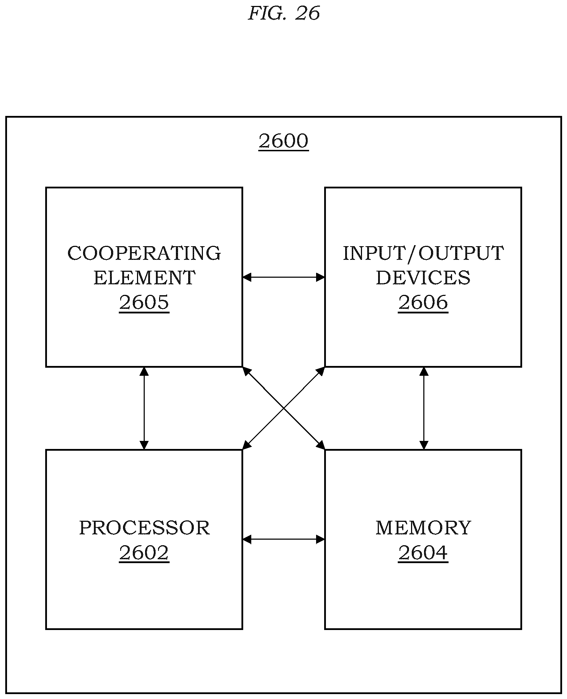

FIG. 26 depicts an example embodiment of a computer suitable for use in performing various functions presented herein.

The computer 2600 includes a processor 2602 (e.g., a central processing unit (CPU), a processor, a processor having a set of processor cores, a processor core of a processor, or the like) and a memory 2604 (e.g., a random access memory, a read only memory, or the like). The processor 2602 and the memory 2604 may be communicatively connected. In at least some example embodiments, the computer 2600 may include at least one processor and at least one memory including computer program code, wherein the at least one memory and the computer program code are configured to, with the at least one processor, cause the computer to perform various functions presented herein.

The computer 2600 also may include a cooperating element 2605. The cooperating element 2605 may be a hardware device. The cooperating element 2605 may be a process that can be loaded into the memory 2604 and executed by the processor 2602 to implement various functions presented herein (in which case, for example, the cooperating element 2605 (including associated data structures) can be stored on a non-transitory computer-readable storage medium, such as a storage device or other suitable type of storage element (e.g., a magnetic drive, an optical drive, or the like)).

The computer 2600 also may include one or more input/output devices 2606. The input/output devices 2606 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 2600 may represent a general architecture and functionality suitable for implementing functional elements described herein, portions of functional elements described herein, or the like, as well as various combinations thereof. For example, computer 2600 may provide a general architecture and functionality that is suitable for implementing one or more elements presented herein, such as node or a portion thereof, a controller or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. Apparatus comprising means for performing:
supporting communication of a source routed packet including an encoding of a set of hops to be traversed by the source routed packet, wherein the encoding of the set of hops includes an encoding of a first address of a first hop in the set of hops and an encoding of address replacement information associated with a second hop in the set of hops, wherein the address replacement information is configured to support replacement of a portion of the first address with an address replacement portion to form a second address of the second hop in the set of hops.

2. The apparatus according to claim 1, wherein the address replacement information includes a starting replacement position of the first address, an ending replacement position of the first address, and the address replacement portion.

3. The apparatus according to claim 1, wherein the address replacement information includes a starting bit position of the first address for the portion of the first address to be replaced with the address replacement portion, an ending bit position of the first address for the portion of the first address to be replaced with the address replacement portion, and a bit string for use as the address replacement portion.

4. The apparatus according to claim 1, wherein the encoding of the set of hops is based on a compressed source route block that includes:
a base address field encoding the first address of the first hop;
a length field encoding a length of a portion of the compressed source route block;
a substitute bit string list encoding the address replacement information associated with the second hop in the set of hops; and
a pointer field encoding a location, within the substitute bit string list, of the address replacement information associated with the second hop in the set of hop.

5. The apparatus according to any of claims 1 to 4, wherein the source routed packet is an Internet Protocol (IP) packet, a Multiprotocol Label Switching (MPLS) packet, or an Ethernet packet.

6. The apparatus according to any of claims 1 to 4, wherein the source routed packet is an Internet Protocol version 4 (IPv4) packet, wherein the encoding of the set of hops is included within an IPv4 Header Option, wherein the IPv4 Header Option includes a type field configured to indicate that the IPv4 Header Option is a compressed source route option, a length field, and a set of compressed source route blocks including at least a first compressed source route block including the encoding of the first address of the first hop in the set of hops and the encoding of address replacement information associated with the second hop in the set of hops.

7. The apparatus according to any of claims 1 to 4, wherein the source routed packet is an Internet Protocol version 4 (IPv4) packet, wherein the encoding of the set of hops is included within an IPv4 Shim Header.

8. The apparatus according to any of claims 1 to 4, wherein the source routed packet is an Internet Protocol version 6 (IPv6) packet, wherein the encoding of the set of hops is included within an IPv6 Extension Header, wherein the IPv6 Extension Header is a Hop-by-Hop Options Header, wherein the Hop-by-Hop Options Header includes a Next Header field, a Header Extension Length field, and an Options field, wherein the Options field includes an Option Type field configured to indicate that the Hop-by-Hop Options Header includes a compressed source route option, an Option Data Length field, and an Option Data field including a set of compressed source route blocks that includes at least a first compressed source route block including the encoding of the first address of the first hop in the set of hops and the encoding of address replacement information associated with the second hop in the set of hops.

9. The apparatus according to any of claims 1 to 4, wherein the source routed packet is an Internet Protocol version 6 (IPv6) packet, wherein the encoding of the set of hops is included within an IPv6 Shim Header.

10. The apparatus according to any of claims 1 to 4, wherein the source routed packet is an Internet Protocol (IP) packet, wherein the encoding of the set of hops is included within an IP Shim Header, wherein the IP Shim Header includes a type field configured to indicate that the IP Shim Header includes a compressed source route, a length field, a next header field, and a payload including a set of compressed source route blocks including at least a first compressed source route block including the encoding of the first address of the first hop in the set of hops and the encoding of address replacement information associated with the second hop in the set of hops.

11. The apparatus according to any of claims 1 to 4, wherein the source routed packet is a Multiprotocol Label Switching (MPLS) packet, wherein the MPLS packet includes a set of labels, wherein the set of labels includes a first label configured to indicate that the set of labels includes a compressed source route, a second label including the encoding of the first address of the first hop in the set of hops, and a third label including the encoding of address replacement information associated with the second hop in the set of hops.

12. The apparatus according to any of claims 1 to 11, wherein the means for supporting communication of the source routed packet includes means for performing:
identifying, by a node, a source route for the source routed packet, wherein the source route includes the set of hops;
associating, by the node, the encoding of the set of hops with a packet to form the source routed packet; and
forwarding, by the node, the source routed packet.

13. The apparatus according to any of claims 1 to 11, wherein the means for supporting communication of the source routed packet includes means for performing:
receiving, by a node which is the first hop, the source routed packet;
determining, by the node which is the first hop, based on the first address and the address replacement information associated with the second hop, the second address of the second hop; and
forwarding, by the node which is the first hop toward the second hop based on the second address of the second hop, the source routed packet.

14. A non-transitory computer readable medium storing computer program code which, when executed by an apparatus, causes the apparatus at least to perform:
supporting communication of a source routed packet including an encoding of a set of hops to be traversed by the source routed packet, wherein the encoding of the set of hops includes an encoding of a first address of a first hop in the set of hops and an encoding of address replacement information associated with a second hop in the set of hops, wherein the address replacement information is configured to support replacement of a portion of the first address with an address replacement portion to form a second address of the second hop in the set of hops.

15. A method, comprising:
supporting communication of a source routed packet including an encoding of a set of hops to be traversed by the source routed packet, wherein the encoding of the set of hops includes an encoding of a first address of a first hop in the set of hops and an encoding of address replacement information associated with a second hop in the set of hops, wherein the address replacement information is configured to support replacement of a portion of the first address with an address replacement portion to form a second address of the second hop in the set of hops.
